# EUROPEAN PATENT APPLICATION

(11) **EP 4 814 928 A1**
(43) Date of publication of application: **30.09.2026**
(21) Application number: 25190894.3
(22) Date of filing: 22.07.2025
(51) Int. Cl.: G09B 9/00, G09G 5/00, H04N 13/122, H04N 13/332, H04N 13/366

(54) **WORK SUPPORT SYSTEM AND PROGRAM**

(30) Priority: 26.03.2025 JP 2025051636
(71) Applicant: FUJIFILM Business Innovation Corp., Minato-ku Tokyo (JP)
(72) Inventor: KANEKO, Atsuki, Yokohama-shi, Kanagawa (JP); SASAKI, Hirotake, Ebina-shi, Kanagawa (JP); KATO, Ryoma, Yokohama-shi, Kanagawa (JP)
(74) Representative: Becker Kurig & Partner Patentanwälte mbB

(57) **Abstract**

A work support system includes: an imaging unit that images a work site at which an operator performs work on a working target; a display unit that displays information; a storage unit that stores the information; and a control unit that performs an information process and control, in which the control unit displays information on a placement location at which an article related to the work, which is required according to a procedure of the work, is placed at the work site on the display unit alone or in combination with a video captured by the imaging unit, as support information.

## Description

### BACKGROUND OF THE INVENTION

### (i) Field of the Invention

The present invention relates to a work support system and a program.

### (ii) Description of Related Art

In JP2021-51519A (Claim 1, [0009], and FIGS. 1 to 3) described below, a work support system including an MR device, a database, and a support server is described.

In the work support system, on-site work can be easily executed based on work support information received from the support server while an operator visually recognizes a device or equipment at a site through a display of the MR device.

JP2021-180408A (Claim 13 and FIGS. 1 and 2) describes an information processing system including a server and a terminal.

The server transmits, to the terminal, information for reproducing a moving image in which an object is imaged by the terminal in a case where the object is changed from a first state to a second state, in a case where the object is returned from the second state to the first state. The terminal reproduces the moving image based on the information received from the server, and displays the moving image on a screen.

JP2019-163670A (Claim 1 and FIGS. 1 and 2) describes a work support apparatus for a construction machine including an imaging device, a display device, and a control device.

The control device is configured to recognize an image of a predetermined object that is at least a part of the construction machine in an image acquired by the imaging device, and display information on the predetermined object in an augmented reality manner to correspond to the predetermined object.

JP2017-97856A (Claim 1, [0007], and FIGS. 1 and 2) discloses an information processing apparatus that supports work in maintenance of an apparatus.

The information processing apparatus includes a storage unit, a determination unit, an imaging unit, an analysis unit, and a display control unit.

The information processing apparatus can support the maintenance work based on a state of the apparatus indicated in work procedure information created in advance and an actual state of the apparatus to be maintained.

### SUMMARY OF THE INVENTION

An object of the present invention is to provide work support that informs an operator of a location at which an article related to work, which is required according to a procedure of the work, is placed at a work site.

According to a first aspect of the present disclosure, there is provided a work support system including: an imaging unit that images a work site at which an operator performs work on a working target; a display unit that displays information; a storage unit that stores the information; and a control unit that performs an information process and control, in which the control unit displays information on a placement location at which an article related to the work, which is required according to a procedure of the work, is placed at the work site on the display unit alone or in combination with a video captured by the imaging unit, as support information.

According to a second aspect of the present disclosure, in the work support system according to the first aspect, the control unit may specify the placement location at the work site.

According to a third aspect of the present disclosure, in the work support system according to the second aspect, the control unit may specify, as the placement location, any location of a designated location that is input and designated by the operator, a use location that is specified as the placement location by the control unit using a location used by the operator for placing the article, and a proposed location that is proposed by the control unit.

According to a fourth aspect of the present disclosure, in the work support system according to according to the third aspect, the control unit may display a selection image from which the operator selects any location of the designated location, the use location, and the proposed location as the placement location, on the display unit.

According to a fifth aspect of the present disclosure, in the work support system according to any one of the first to fourth aspects, the control unit may display the information on the placement location when the work is started.

According to a sixth aspect of the present disclosure, in the work support system according to the fifth aspect, the control unit may sequentially switch and display the information on the placement location corresponding to the procedure of the work.

According to a seventh aspect of the present disclosure, in the work support system according to the fifth aspect, in a case where the article required for the work remains at the placement location after the work is ended, the control unit may display notification information that the remaining article is present on the display unit.

According to an eighth aspect of the present disclosure, in the work support system according to the seventh aspect, in a case where there is an unrequired article that is not required for the work among remaining articles, the control unit may not display the notification information on the unrequired article.

According to a ninth aspect of the present disclosure, in the work support system according to any one of the first to eighth aspects, the information on the placement location may be an image including a mark indicating the placement location or an article placed at the placement location.

According to a tenth aspect of the present disclosure, in the work support system according to any one of the first to ninth aspects, the information on the placement location may be an image including a three-dimensional image in which the placement location is represented in three dimensions.

According to an eleventh aspect of the present disclosure, the work support system according to any one of the first to tenth aspects, may further include: an operation unit that performs an input operation of the operator by tracking a motion of the operator pointing to an operation image displayed on the display unit.

According to a twelfth aspect of the present disclosure, in the work support system according to any one of the first to eleventh aspects, the work support system may be configured as a system including a mobile device that is carried and used by the operator.

According to a thirteenth aspect of the present disclosure, in the work support system according to the twelfth aspect, the mobile device may be a head-mounted device that is worn on a head portion of the operator and is used.

According to a fourteenth aspect of the present disclosure, there is provided a program causing a computer to execute: a function of displaying information on a placement location at which an article related to work performed by an operator on a working target, which is required according to a procedure of the work, is placed at a work site.

According to a fifteenth aspect of the present disclosure, the program according to the fourteenth aspect, may cause the computer to further execute: a function of specifying the placement location at the work site.

With the work support system according to the first aspect, it is possible to work support of informing the operator of a location at which an article related to the work, which is required according to the procedure of the work, is placed at the work site.

With the work support system according to the second aspect, the information on the placement location used as the support information can be managed as information specified according to the work site.

With the work support system according to the third aspect, the degree of freedom of the specifying of the placement location is increased as compared with a case where the placement location is determined without an option.

With the work support system according to the fourth aspect, it is possible to give an opportunity to the operator to select the placement location.

With the work support system according to the fifth aspect, it is possible to recognize the location at which the article required for the procedure of the work is placed when the work is started.

With the work support system according to the sixth aspect, it is possible to recognize the placement location at which the article required for work is placed, in accordance with the procedure of the work.

With the work support system according to the seventh aspect, it is possible to prevent forgetting of work due to remaining of the article required for the work.

With the work support system according to the eighth aspect, it is possible to prevent the work from being delayed due to the presence of the unrequired article.

With the work support system according to the ninth aspect, it is possible to easily recognize the article required for the work or the location at which the article is placed, as compared with a case where the article or the like required for the work is not displayed in the image including the mark.

With the work support system according to the tenth aspect, it is possible to accurately recognize the article required for the work or the location at which the article is placed by displaying the three-dimensional image, as compared with a case where the article or the like required for the work is not displayed in the image including the three-dimensional image.

With the work support system according to the eleventh aspect, it is possible to easily perform the input operation of the information as compared with a case where the operation unit for performing the input operation of the operator by tracking the motion of the operator pointing to the operation image displayed on the display unit is not provided.

With the work support system according to the twelfth aspect, the operator can receive the support for the work by carrying the work support system, as compared with a case where the work support system is not configured as a system including the mobile device.

With the work support system according to the thirteenth aspect, a hand of the operator is free and the operator can easily perform the work, as compared with a case where the mobile device is not the head-mounted device.

With the program according to the fourteenth aspect, it is possible to perform work support of informing the operator of the location at which the article related to the work, which is required according to the procedure of the work, is placed at the work site.

With the program according to the fifteenth aspect, the information on the placement location used as the support information can be acquired as the information specified according to the work site.

### BRIEF DESCRIPTION OF THE DRAWINGS

Exemplary embodiment(s) of the present invention will be described in detail based on the following figures, wherein:
FIG. 1 is a schematic perspective view illustrating an example of a work support system and a work site according to Exemplary Embodiment 1;
FIG. 2A is a schematic front view illustrating a configuration example of the work support system in FIG. 1, and FIG. 2B is a schematic side view of the work support system in FIG. 2A;
FIG. 3A is a block diagram of a head-mounted device constituting the work support system, and FIG. 3B is a diagram illustrating a storage unit;
FIG. 4 is a schematic perspective view illustrating an example of the work site and a placement location in FIG. 1;
FIG. 5 is a flowchart illustrating a flow of work using the work support system;
FIG. 6 is a diagram illustrating an example of display contents of the work support system before a start of the work;
FIG. 7 is a flowchart illustrating a flow of a work support process A of the work support system;
FIG. 8 is a flowchart illustrating a flow of a process of specifying the placement location;
FIG. 9A is a diagram illustrating an example of a selection image related to specifying the placement location, and FIG. 9B is a diagram illustrating an example of specifying and managing the placement location for the work;
FIG. 10 is a flowchart illustrating a flow of a display process of information on the placement location;
FIG. 11 is a diagram illustrating a display example of support information by the work support system after the start of work;
FIG. 12 is a diagram illustrating an example of a display content of the information on the placement location;
FIG. 13A is a diagram illustrating an example in which the information on the placement location existing on a rear side of an object is not displayed from a viewpoint of an operator, and FIG. 13B is a diagram illustrating an example in which the information on the placement location in FIG. 13A is displayed;
FIG. 14 is a flowchart illustrating a flow of a process of a warning display;
FIG. 15A is a diagram illustrating an example of a display check image of the information on the placement location, FIG. 15B is a diagram illustrating an example of an enlarged setting check image of the placement location, and FIG. 15C is a diagram illustrating an example of a warning display image;
FIG. 16A is a diagram illustrating a display example of support information on information on another placement location, and FIG. 16B is a diagram illustrating a display example of support information on information on still another placement location;
FIG. 17A is a diagram illustrating a status example of one placement location, FIG. 17B is a diagram illustrating a status example of another placement location, and FIG. 17C is a diagram illustrating a status example of still another placement location;
FIG. 18 is a diagram illustrating an example of management information on each status of the placement location;
FIG. 19 is a flowchart illustrating a flow of attachment work using the work support system;
FIG. 20 is a flowchart illustrating a flow of a work support process B of the work support system;
FIG. 21A is a diagram illustrating a display example of support information by the work support system in first attachment work, and FIG. 21B is a diagram illustrating a display example different from the display example in FIG. 21A;
FIG. 22A is a diagram illustrating a display example of support information by the work support system in subsequent attachment work, and FIG. 22B is a diagram illustrating a display example different from the display example in FIG. 22A;
FIG. 23A is a diagram illustrating a display example of support information by the work support system in the last attachment work, and FIG. 23B is a diagram illustrating a display example different from the display example in FIG. 23A;
FIG. 24A is a diagram illustrating an example in a case where an article related to work remains at the placement location, and FIG. 24B is a diagram illustrating an example different from FIG. 24A;
FIG. 25 is a diagram illustrating an example of a notification image;
FIG. 26 is a schematic perspective view illustrating an example of a work support system and a work site according to Exemplary Embodiment 2;
FIG. 27 is a schematic perspective view illustrating a complete unit assembled with assembly components illustrated in FIG. 26;
FIG. 28 is a flowchart illustrating a flow of assembly work using the work support system;
FIG. 29 is a flowchart illustrating a flow of a work support process C of the work support system;
FIG. 30 is a diagram illustrating an example of management information indicating a relationship between a portion of assembly work and a specified placement location of the assembly component;
FIG. 31 is a diagram illustrating a display example of support information by the work support system in first assembly work;
FIG. 32A is a diagram illustrating a display example of support information by the work support system in subsequent assembly work, and FIG. 32B is a diagram illustrating a display example of support information by the work support system in the last assembly work; and
FIG. 33A is an outline view illustrating a modification example of the work support system, and FIG. 33B is an outline view illustrating another configuration example of the work support system.

### DETAILED DESCRIPTION OF THE INVENTION

Hereinafter, exemplary embodiments of the present invention will be described.

### Exemplary Embodiment 1.

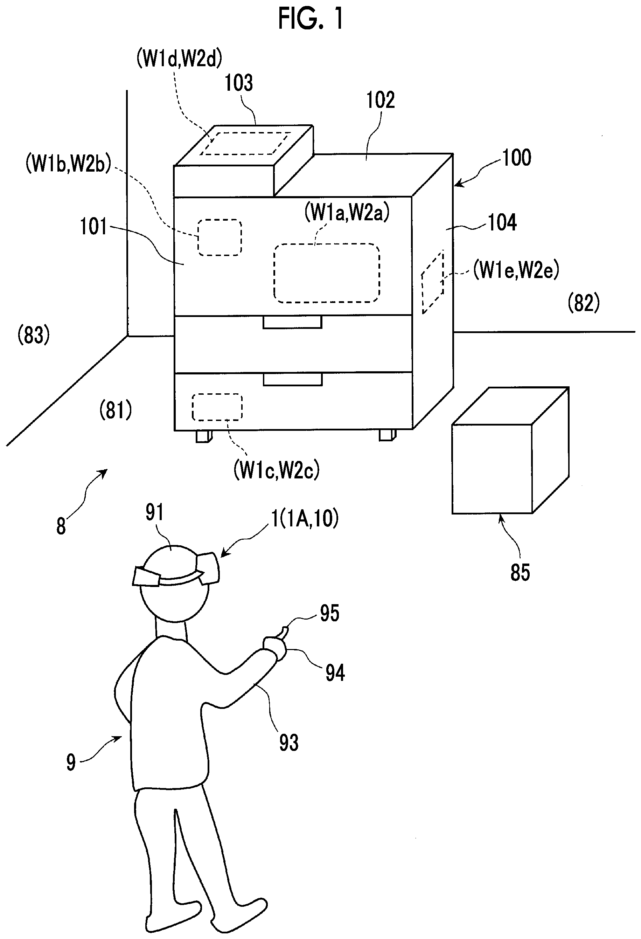

FIG. 1 is a diagram illustrating an example of a work support system and a work site according to Exemplary Embodiment 1 of the present invention.

The work support system 1 is a system that supports work performed by an operator 9 at a work site 8 at which a working target 100 is placed.

The working target 100 is an object on which work is to be performed. The working target 100 is, for example, various machines, apparatuses, and the like represented by an image forming apparatus or the like. The working target 100 is not limited to the described devices.

The work is work of inspecting, repairing, and partially replacing the working target 100. These works include specific work such as detachment work or attachment work.

The detachment work is work of detaching a component constituting the working target 100. The attachment work is work of attaching a detachment component detached in the detachment work or a replacement component to be replaced. The replacement component is not limited to a new component to be replaced, and also includes a component that is repaired after being detached.

In addition, the work also includes assembly work.

The work site 8 is a location having a space in which work can be performed. The work site 8 includes, for example, a location such as indoors having a floor 81, a plurality of walls 82 and 83, and the like.

In the work site 8 illustrated in FIG. 1, the working target 100 is present at a position on the floor 81, which is away from the plurality of walls 82 and 83.

In addition, in the work site 8 illustrated in FIG. 1, a peripheral object 85 other than the working target 100 is present. The peripheral object 85 is an object that is present at a position in the vicinity of the working target 100 in the floor 81. The peripheral object 85 is, for example, an object such as a workbench or a table.

The work support system 1 according to Exemplary Embodiment 1 is configured as a work support system 1A that is a system including a mobile device 10. The mobile device 10 is a device that can be carried and used by the operator 9.

In addition, the work support system 1A is configured with a single head-mounted device 11 that is an example of the mobile device 10. That is, the work support system 1A is a stand-alone type system configured with only the head-mounted device 11.

The head-mounted device 11 is a device that is worn on a head portion 91 of the operator 9 and is used.

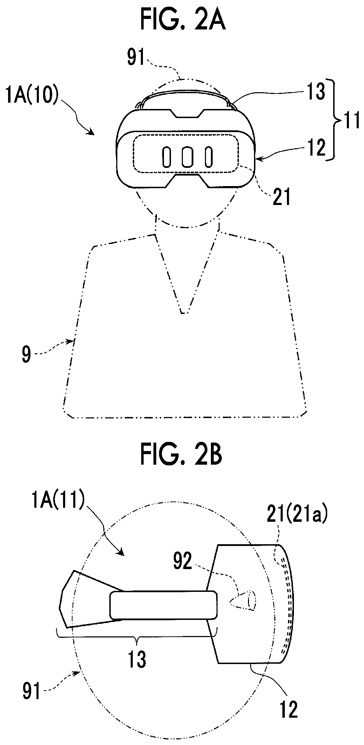

As illustrated in FIGS. 2A and 2B, the head-mounted device 11 includes a device main body 12 and a mounting band 13.

The device main body 12 is a portion having main components and functions.

The device main body 12 is used in a state of being placed on a face of the head portion 91 of the operator 9 (mainly in front of eyes 92) and covering the eyes 92 and the surrounding portion. The device main body 12 has a housing consisting of a shape and a structure that can be mounted to cover a part of the face of the operator 9. The device main body 12 in Exemplary Embodiment 1 adopts a goggle-type housing.

The mounting band 13 is a member that is attachably and detachably worn on the head portion 91 of the operator 9 to support the device main body 12.

Such a head-mounted device 11 is also referred to as a head-mounted device or a head-mounted display.

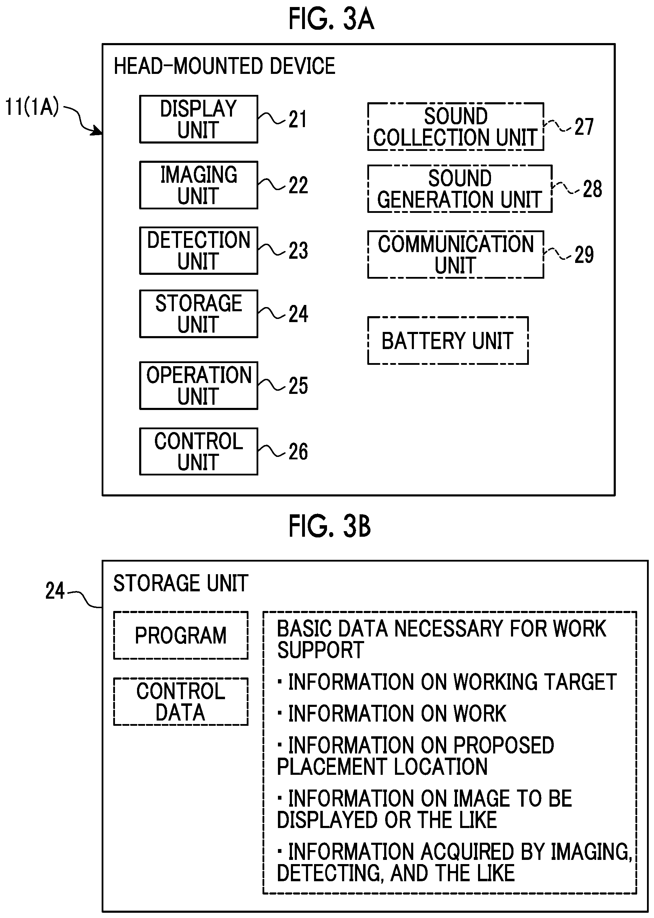

The head-mounted device 11 is equipped with a display unit 21, an imaging unit 22, a detection unit 23, a storage unit 24, an operation unit 25, a control unit 26, and the like (see FIG. 3A).

The head-mounted device 11 may be equipped with a sound collection unit 27, a sound generation unit 28, a communication unit 29, a battery unit, and the like (see FIG. 3A).

The display unit 21 is a portion that displays various types of information.

The display unit 21 has a light non-transmissive type through which an outside cannot be seen such as the work site 8 or a light transmission type through which the outside can be seen. In Exemplary Embodiment 1, the display unit 21 having a light non-transmissive type is applied.

The display unit 21 is configured by using required components such as a liquid crystal display panel, an organic EL display panel, an optical element, and a light guide plate.

The imaging unit 22 is a portion that images the work site 8 at which the operator 9 performs work on the working target 100.

The imaging unit 22 is configured with a camera, an image processing circuit, or the like that obtains information on a subject, such as the work site 8, as pixels of the three primary colors.

The detection unit 23 is a portion that detects information required for an information process or a control operation by the control unit 26.

The detection unit 23 acquires information or performs a recognition process required for recognizing the environment such as a state of the work site 8 and a status change, or recognizing a human body such as a position and a motion of the operator 9, for example.

The detection unit 23 is configured with, for example, a depth sensor, an inertial measurement sensor, or the like. The depth sensor is a sensor that acquires information on a distance between the head-mounted device 11 and a target object and a distance between the target objects. The target object at this time is an imaged object. The inertial measurement sensor is a sensor that acquires information such as an angular velocity and a movement speed according to a motion of the target object.

The storage unit 24 is a portion that stores various types of information.

The storage unit 24 is configured with a read only memory (ROM), a random access memory (RAM), another storage, and the like.

The storage unit 24 stores various programs, control data, information such as basic data required for work support, and the like (see FIG. 3B).

The program includes a program that controls basic operations of the head-mounted device 11, a program that executes functions required for supporting work, and the like.

The basic data required for the work support is information on a working target, information on work, information on a proposed placement location, information on an image to be displayed, and the like, and information acquired by imaging, detection, and the like.

Among these, the information on the working target is information for identifying the assumed working target 100.

In addition, the information on the working target also includes information on a shape or a structure of an entirety, a part, or the like of the working target 100. The information on the shape or structure is, for example, 3D model information such as CAD data of the working target 100.

The information on the work is information on a type, a portion, a procedure, and the like of the work performed by the operator 9 on the working target 100.

The information on the work also includes information on a procedure of detachment work, attachment work, and assembly work, and components, tools, and the like required for the work. The procedure is an order in which the work is performed.

The information on the proposed placement location is information on a proposed location (Pz) which is one of specific options of a placement location P to be described below.

The information on the image and the like to be displayed is template information such as an image or a message to be displayed on the display unit 21 for supporting the work.

The information acquired by imaging, detection, and the like is image information obtained at any time from the imaging unit 22, detection information obtained at any time from the detection unit 23, and the like.

The operation unit 25 is a portion with which the operator 9 performs an input operation.

The operation unit 25 can be configured with an operation device (controller) that is operated by the operator 9 with a hand 94 and is a separate body from the device main body 12. Meanwhile, from the viewpoint of ease of work and the like, for example, it is preferable that the operation unit 25 is configured to implement the input operation by reading a motion of the operator 9.

For example, the operation unit 25 adopts a configuration in which the input operation of the operator 9 is performed by tracking the motion of the operator 9 pointing to an operation image (screen) displayed on the display unit 21.

The operation image is an image that can be selected by the operator 9 or an image to which the motion (trajectory) of the operator 9 is input as information.

Such an operation unit 25 is configured by using, for example, a technique such as hand tracking or eye tracking.

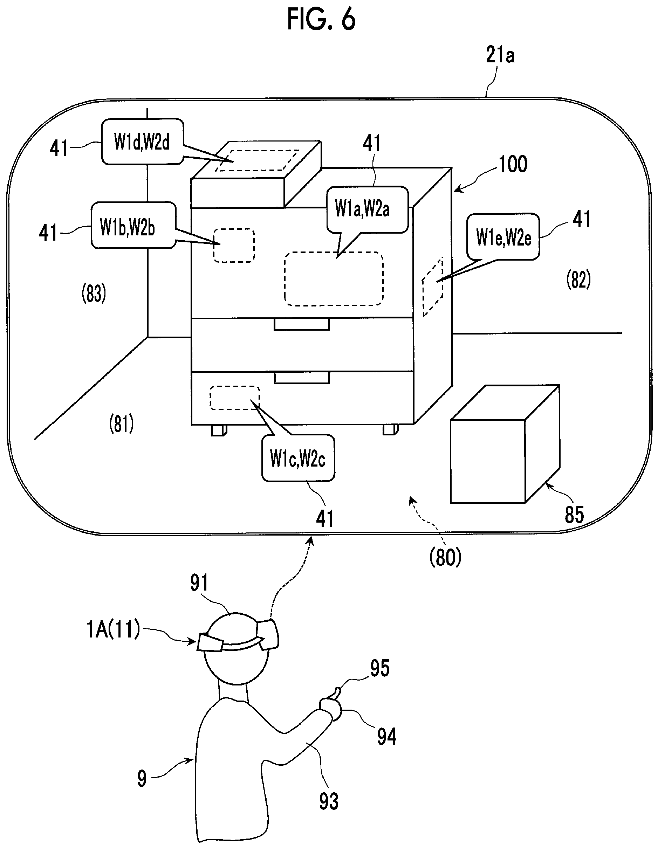

In a case where the hand tracking technique is used, the input operation can be performed by analyzing and tracking a motion of the hand 94 or a finger 95 (see FIG. 6 and the like) of the operator 9 with respect to the operation image from a captured image or detection information. In a case where the eye tracking technique is used, the input operation can be performed by tracking a motion of the eye 92 of the operator 9 with respect to the operation image.

A reference numeral 93 in FIG. 6 or the like denotes an arm of the operator 9.

The control unit 26 is a portion for performing an information process or control.

The control unit 26 is configured with a computer including a processor (processing apparatus), a memory, an input and output unit, and the like.

The control unit 26 reads a program and the like stored in the storage unit 24 or the like, performs a required arithmetic process or an information process, and controls an operation of the control target.

The control unit 26 in Exemplary Embodiment 1 is also configured to perform an information process or control required for supporting the work.

That is, the control unit 26 performs an information process or control for specifying the placement location P for placing an article 110 related to the work at the work site 8. In addition, the control unit 26 performs an information process or control for displaying information on the placement location P on the display unit 21 as support information 50.

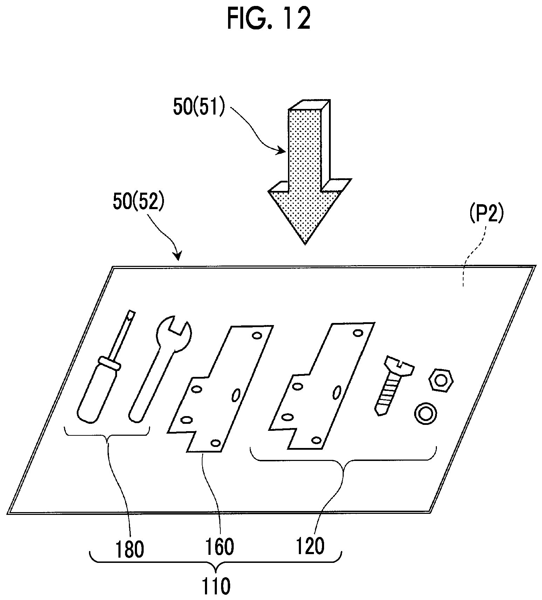

Here, the article 110 related to the work is, for example, a detachment component 120 or a tool 180 used for the work (see FIG. 12).

The detachment component 120 is a component that is detached from the working target 100 in detachment work. The detachment component 120 also includes a fixing tool such as a screw or a nut. The tool 180 is a tool used for work such as the detachment work and attachment work. The tool 180 includes, for example, a plus or minus driver, various wrenches, and the like.

In addition, the article 110 related to the work also includes a replacement component 160 that is replaced and attached in the attachment work of the working target 100.

The placement location P is a location at which the article 110 related to the work can be temporarily placed in the work site 8.

Examples of the placement location P include a part of the floor 81 on which the working target 100 is placed, a part of the peripheral object 85, a part of the working target 100, and the like.

The control unit 26 functions to specify the placement location P according to the work site 8 for each work on different portions of the same working target 100.

The specifying of the placement location P is performed in any of the following aspects in a case of performing a plurality of works which are the same work on the different portions. One aspect is an aspect in which a location is specified each time the plurality of works are performed on different portions. The other aspect is an aspect in which all the placement locations P are specified at once before performing the plurality of works at different portions.

The information on the placement location P as the support information 50 is information that can inform the operator 9 of a location at which the article 110 related to the work, which is required according to a procedure of the work, is placed at the work site 8.

As the information on the placement location P as the support information 50, for example, information of the following type or format is used.

That is, the information is information consisting of a mark 51 indicating at least one of a position of the placement location P or the article 110 related to the work. The information consisting of the mark 51 is configured with a symbol such as an arrow, a figure, or a text.

In addition, the information is information or the like consisting of a three-dimensional image 52 in which the placement location P is represented in three dimensions.

In addition, the control unit 26 functions to display the information on the placement location P, which is the support information 50, in combination with a video captured by the imaging unit 22 on the display unit 21.

In this case, the control unit 26 displays the video of the work site 8 captured by the imaging unit 22 on the display unit 21, and then combines and displays the information on the placement location P.

At this time, the control unit 26 displays the information on the placement location P by using a mixed reality (MR) or augmented reality (AR) technique.

### (Use and Operation of Work Support System)

Next, a use and an operation of the work support system 1A will be described.

Here, it is assumed that the work site 8 is an indoor space having the floor 81, the wall 82 on a back side, and the wall 83 on a left side as illustrated in FIG. 1.

In addition, it is assumed that the peripheral object 85 is placed at a position on the floor 81 on the right and obliquely front side of the working target 100 in the work site 8.

It is assumed that the working target 100 is a device having an external shape having a front surface portion 101, an upper surface portion 102, a projecting portion 103, a side surface portion 104, and the like.

In addition, it is assumed that the working target 100 is a device that requires inspection and replacement repair. More specifically, a case is assumed in which the working target 100 is a device having detachment work W1 and an attachment work W2 for 5 portions a to e.

In FIG. 1 and the like, W1a indicates detachment work for the portion a, and W2a indicates attachment work for the portion a. In addition, in FIG. 1 and the like, W1b and W2b indicate detachment work and attachment work for the portion b, and W1c and W2c indicate detachment work and attachment work for the portion c. Further, in FIG. 1 and the like, W1d and W2d indicate detachment work and attachment work for the portion d, and W1e and W2e indicate detachment work and attachment work for the portion e.

The portions a and b are portions at which work is started from an upper portion of the front surface portion 101 of the working target 100, respectively. The portion c is also a portion at which work is started from a lower portion of the front surface portion 101. The portion d is a portion at which work is started from an upper portion of the projecting portion 103. The portion e is a portion at which work is started from a side of the side surface portion 104.

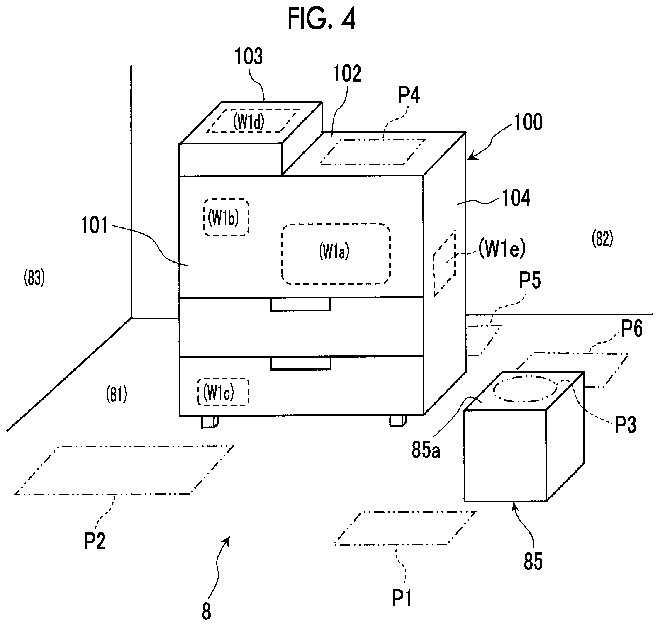

Further, it is assumed that the following six placement locations P1 to P6 can be adopted as the placement location P for the work site 8 (see FIG. 4). In addition, the placement locations P1 to P6 in this case are locations for placing the detachment component 120 for detaching in the detachment work W1.

The placement location P1 is a part (rectangular area) of the floor 81 on a front side of the peripheral object 85 as viewed from a position of the operator 9 illustrated in FIG. 1.

The placement location P2 is a part (rectangular area) of the floor 81 on a front side of the working target 100 as viewed from the operator 9.

The placement location P3 is an upper surface portion 85a of the peripheral object 85.

The placement location P4 is a part of the upper surface portion 102 of the working target 100.

The placement location P5 is a part (rectangular area) of the floor 81, which is located on a rear side (back side) of the working target 100 as viewed from the operator 9.

The placement location P6 is a part (rectangular area) of the floor 81, which is located on a rear side of the peripheral object 85 as viewed from the operator 9.

In addition, it is assumed that the placement location P2 is a location consisting of a larger area than the placement location P1.

In addition, the placement location P3 is a location with the smallest range as compared with the other placement locations P1, P2, and P4 to P6.

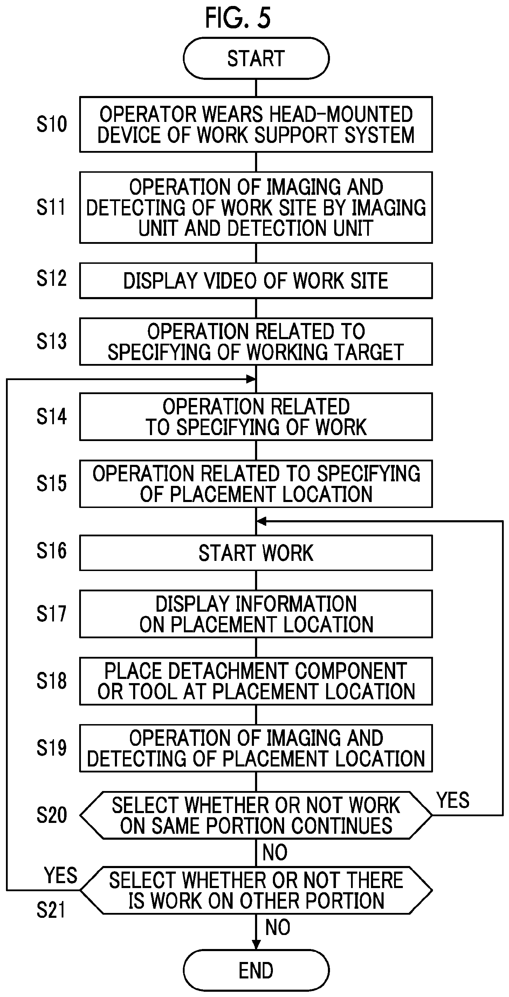

First, the operator 9 wears the head-mounted device 11 on the head portion 91 to use the work support system 1A (step S10 in FIG. 5).

The head-mounted device 11 is automatically started in accordance with the wearing or is started by a manual operation such as pressing a switch provided in the device main body 12.

Next, the head-mounted device 11 performs imaging and detecting of the work site 8 by the imaging unit 22 and the detection unit 23 (step S11).

At this time, the imaging of the work site 8 is performed by the operator 9 wearing the head-mounted device 11 looking at (viewing) the work site 8. In addition, the detection of the work site 8 at this time is performed by the operator 9 directing the head-mounted device 11 to the work site 8.

Next, the head-mounted device 11 displays a video 80 of the work site 8 captured by the imaging unit 22 on the display unit 21 (step S12).

The video 80 at this time is displayed on a display screen 21a of the display unit 21 as a video in which a state of the work site 8 is imaged by the operator 9 with the naked eye (see FIG. 6). In addition, the video 80 at this time is displayed as a color image that substantially corresponds to a real image of the work site 8. Further, the working target 100, the floor 81, the walls 82 and 83, the peripheral object 85, and the like included in the video 80 at this time are captured objects.

Next, in the head-mounted device 11, an operation related to specifying of the working target 100 is performed (step S13).

The operation related to the specifying of the working target 100 is an operation for specifying a type (a model or the like) of the working target 100.

The operation related to the specifying is performed automatically or manually by the operator 9 selecting a specific image displayed on the display unit 21.

In a case of being automatically performed, collation is performed by collating image information of the working target 100 captured by the imaging unit 22 with information on the working target stored in the storage unit 24. For example, in a case where a model name or a product number is attached to the working target 100, collation regarding the model name or the product number is performed.

Next, in the head-mounted device 11, an operation related to specifying of work is performed (step S14).

The operation related to the specifying of the work is an operation for specifying a type and a portion of the work to be executed.

The operation related to the specifying is manually performed by the operator 9 selecting a specific image 41 displayed on the display unit 21.

In a case where the operator 9 performs a motion of bringing the hand 94 or the finger 95 close to portions (a to e) on which the work is to be performed, the specific image 41 is displayed for each portion (see FIG. 6). The display of the specific image 41 is performed under the control of the control unit 26.

The specific image 41 at this time includes text information (W1a, W2a, or the like) indicating the type and the portion of the work. The specific image 41 illustrated in FIG. 6 is an example in which, for example, text information such as W1a and W2a is included in one square image. The text information at this time indicates that the detachment work W1 and the subsequent attachment work W2 are performed on the portion a. In a case where there is text information indicating a plurality of types of work in the specific image 41 for the same portion, the text information of any one work can be selected.

In addition, the motion of the finger 95 and the like of the operator 9 at this time is tracked and recognized by a hand tracking technique of the operation unit 25.

The operation related to the specifying is performed by the operator 9 selecting the specific image 41 at which the work is to be performed with the finger 95, and performing a stop or pressing motion. Accordingly, the control unit 26 performs a process of specifying and managing the type and the portion of the work indicated in the specific image 41.

Next, in the head-mounted device 11, an operation related to specifying of the placement location P for the specified work is performed (step S15).

Details of the operation or a process related to the specifying of the placement location P at this time will be described below.

In a case where the specific placement location P or preparation of the specific placement location P is completed by the head-mounted device 11, the operator 9 starts the work (step S16).

In the head-mounted device 11, the start of the work is recognized by, for example, determining information such as an input operation of the operator 9.

Here, a case where the operator 9 first performs the detachment work (W1a) and the attachment work (W2a) on the portion a and the placement location P2 is specified as the placement location P will be described.

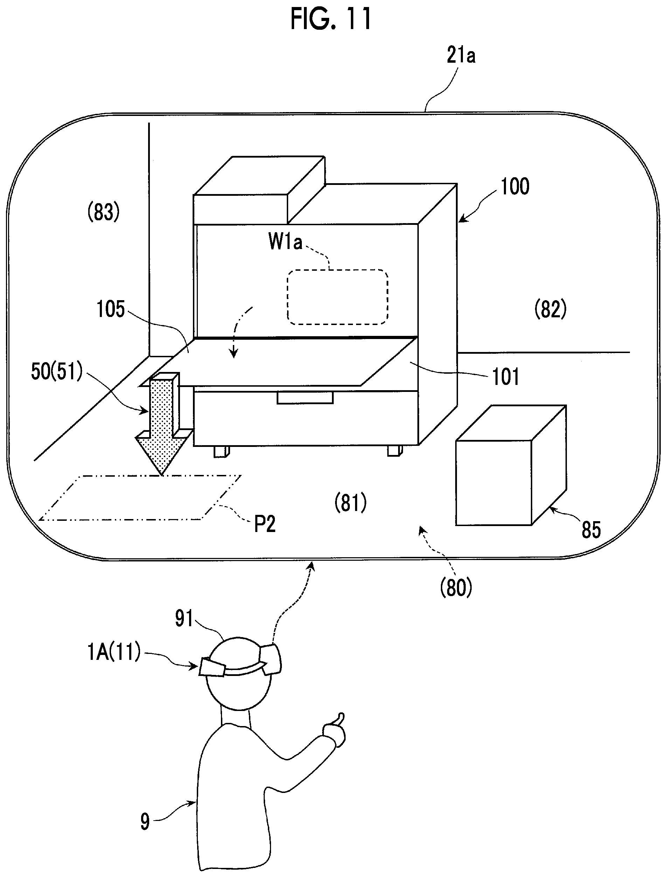

In addition, the detachment work (W1a) is performed in a state where an opening and closing portion 105 at the front surface portion 101 of the working target 100 is opened (see FIG. 11). The opening and closing portion 105 is, for example, an exterior door or the like that is opened and closed with a hinge of a lower end portion as a fulcrum.

Then, in the head-mounted device 11, in a case where the detachment work W1 is first started, the information on the specified placement location P is displayed as the support information 50 on the display unit 21 (step S17).

The display of the information on the placement location P at this time is performed under the control of the control unit 26. In addition, the information on the placement location P illustrated in FIG. 11 is information consisting of the mark 51 of an arrow indicating a location of the placement location P2.

Regarding the information on the placement location P, as illustrated in FIG. 12, information consisting of a three-dimensional image 52 in which the placement location P is represented in three dimensions may be displayed. The information consisting of the three-dimensional image 52 makes it easy to grasp an entity (range, environment, and the like) of the placement location P.

In addition, the information on the placement location P may be displayed as information obtained by combining the information on the mark 51 and the information on the three-dimensional image 52.

The information on the placement location P in the detachment work is not displayed by a specific method of specifying the placement location P, which will be described below.

The specific method for the placement location P is a case where a use location (Py) to be described below is selected and specified as the placement location P. In this case, the information on the placement location P is not displayed in a case where first work in the works is started. In this case, the display is performed from a time when second or subsequent work is started.

Next, the operator 9 places the article 110 related to the work at the specified placement location P (step S18).

In a setting example of this description, the detachment component 120 when being detached from the portion a in the detachment work W1 is placed in the specified placement location P2.

The operator 9 who performs the detachment work can check the information on the placement location P through the display unit 21 of the head-mounted device 11 immediately before placing the detachment component 120.

Accordingly, the operator 9 does not have to be confused about a location at which the detachment component 120 is to be placed even in a case where the location is not prepared in advance, for example, when performing the detachment work W1.

Next, in the head-mounted device 11, imaging and detecting of the placement location P are performed after the detachment work is started (step S19).

At this time, the imaging and the detecting of the placement location P are automatically performed in accordance with an operation of the operator 9 wearing the head-mounted device 11. That is, the operation is performed in conjunction with the operation of the operator 9 placing the detachment component 120 in the specified placement location P2.

Accordingly, in the head-mounted device 11, information for grasping a status of the placement location P2 is obtained.

In addition, the head-mounted device 11 can manage a location at which the article 110 related to the work for the detachment component 120 or the like is actually placed. In addition, the location at which the article 110 related to the work is actually placed is managed, so that the operator 9 may not have confusion about the location at which the article 110 is placed.

Next, in the head-mounted device 11, each time one work in the detachment work is completed, whether or not the work on the same portion continues is selected (determined) (step S20).

In a setting example of this description, the work on the same portion is the detachment work W1 on the portion a.

The completion of one work in the detachment work at this time is recognized by, for example, determining information such as an input operation of the operator 9.

At this time, the selection is performed, for example, by the control unit 26 displaying a check image as to whether the work on the same portion continues on the display unit 21 and determining a selection result of the operator 9.

In a case where it is selected in step S20 that the work on the same portion continues, the process returns to step S16, and the operation described above is repeated in the same manner.

In this case, the subsequent work is performed, and the head-mounted device 11 is operated in the same manner.

Specifically, in a case where the subsequent work is started (step S16), the information on the placement location P as the support information 50 is displayed (step S17). Subsequently, the article 110 related to the work is placed at the specified placement location P (step S18), and imaging and detecting for the placement location P are performed (step S19).

On the other hand, in a case where it is selected in step S20 that the work on the same portion does not continue, whether or not there is work for another different portion is selected (step S21).

In a setting example of this description, it is checked whether or not the detachment work W1 on a portion (any portion of b to e) other than the portion a is performed.

In addition, the selection at this time is performed, for example, by the control unit 26 displaying a check image as to whether or not the work on the other portion continues on the display unit 21 and determining a selection result of the operator 9.

In a case where it is selected in step S21 that there is work on the other portion, the process returns to step S14, and the operation described above is repeated in the same manner.

In this case, the work on the other portion is performed, and the head-mounted device 11 is operated in the same manner.

Specifically, an operation for specifying the work on the other portion is performed (step S14), and an operation for specifying the placement location P for the work is performed (step S15). Next, in a case where the work on the other portion is started (step S16), information on the placement location P is displayed (step S17). Subsequently, the article 110 related to the work is placed at the specified placement location P (step S18), and imaging and detecting for the placement location P are performed (step S19).

On the other hand, in a case where it is selected in step S21 that there is no work on another portion, the work on one same working target 100 is ended.

Meanwhile, in a case where there is another different working target 100 for the same work at the work site 8 and the work on the different working target 100 is to be performed, the process returns to step S13, and the operation described above is repeated in the same manner.

### (Work Support Process A)

Next, an operation of a work support process A by the head-mounted device 11 of the work support system 1A will be described in detail.

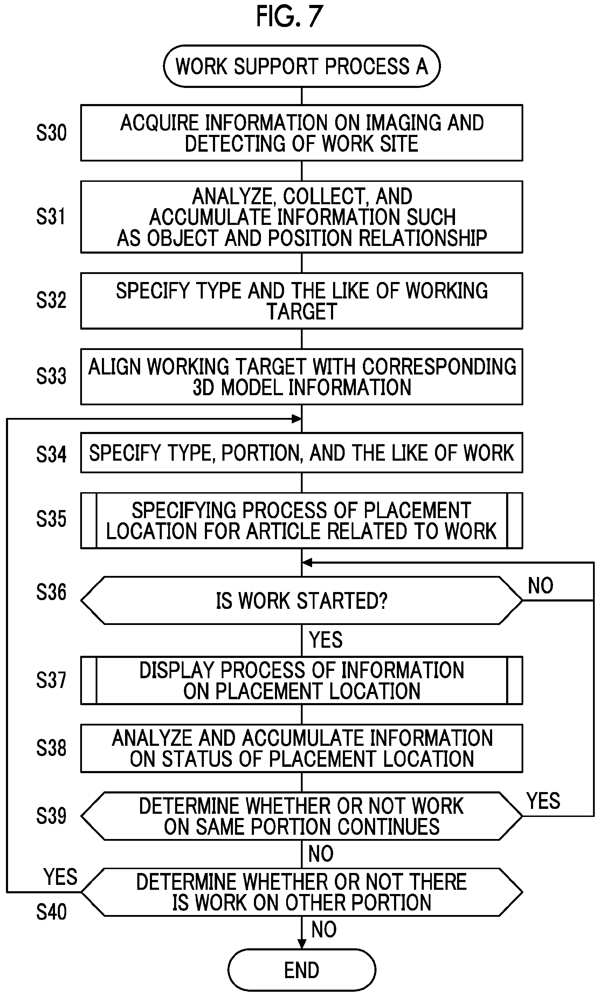

The work support process A starts with acquisition of information on imaging and detecting of the work site 8 (step S30 in FIG. 7).

The imaging information is obtained from the imaging unit 22 as, for example, RGB pixel information. The detection information is obtained from the detection unit 23 as, for example, three-dimensional point cloud information.

Next, in the work support process A, analysis, collection, and accumulation of information such as an object at the work site 8 and a positional relationship are performed (step S31).

Here, the object is the working target 100, the floor 81, the walls 82 and 83, the peripheral object 85, or the like. In addition, the positional relationship is a positional relationship between the operator 9 and the object, a positional relationship between the objects, or the like.

At this time, the analysis or the collection of the information is performed by generating and acquiring information in which the environment of the work site 8 is converted into, for example, a 3D map using the information on the imaging and the detecting.

Next, in the work support process A, a type and the like of the working target 100 are specified (step S32).

The specifying at this time is performed by a manual operation in which the operator 9 selects a specific image displayed on the display unit 21 as described above, or is automatically performed.

In a case of being performed manually, the specifying is performed by the control unit 26 determining a result of a selection operation of the operator 9 for the specific image.

Next, in the work support process A, alignment between the working target 100 and the corresponding 3D model information is performed (step S33).

The 3D model information is information in which a shape and a structure of the working target 100 are generated in three dimensions. As the 3D model information, for example, computer-aided design (CAD) data or the like of the working target 100 is applied.

This alignment is work of matching the 3D model information with a position of the working target 100 in the real world.

By performing the alignment, an image to be displayed on the display unit 21 or the information on the placement location P can be displayed in a positional relationship appropriate for the working target 100 or the work site 8.

Next, in the work support process A, a type, a portion, and the like of work are specified (step S34).

The specifying at this time is performed by the operator 9 selecting the specific image 41 displayed on the display unit 21 with a manual operation, as described above. In the manual specifying, the specifying is performed by the control unit 26 determining a result of the selection operation of the operator 9 on the specific image 41.

### (Specifying Process of Placement Location)

Next, in the head-mounted device 11 (work support process A), a process of specifying the placement location P of the article 110 related to the work is performed (step S35).

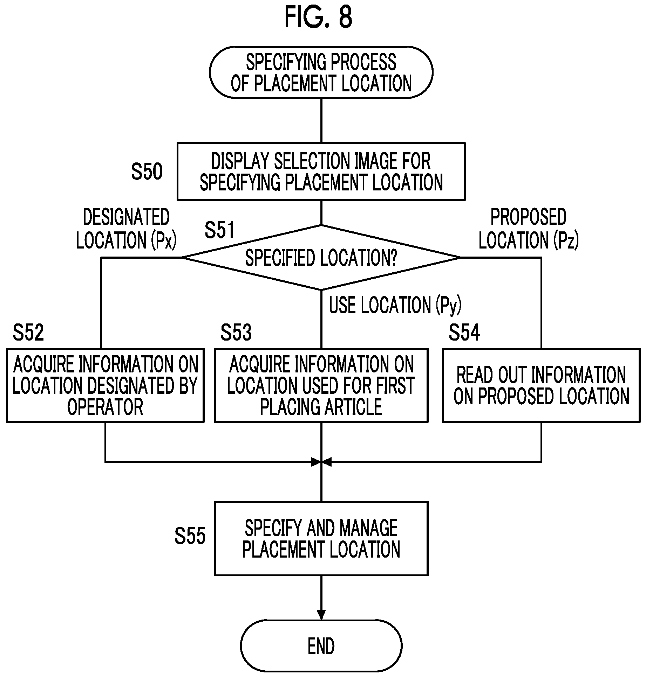

In the specifying process of the placement location P at this time, the control unit 26 displays a selection image 42 on the display unit 21, from which a method of specifying the placement location P can be selected (step S50 in FIG. 8).

The control unit 26 functions to specify any location of a designated location (Px), a use location (Py), or a proposed location (Pz) as the placement location P.

Here, the designated location (Px) is a location input and designated by the operator 9. The use location (Py) is a location used by the operator 9 for placing the article 110 related to the work, and is a location recognized and determined by the control unit 26 as the placement location P. The proposed location Pz is a location proposed by the control unit 26.

The selection image 42 is a content image from which the operator 9 can select any location of the designated location (Px), the use location (Py), and the proposed location (Pz) as the placement location P.

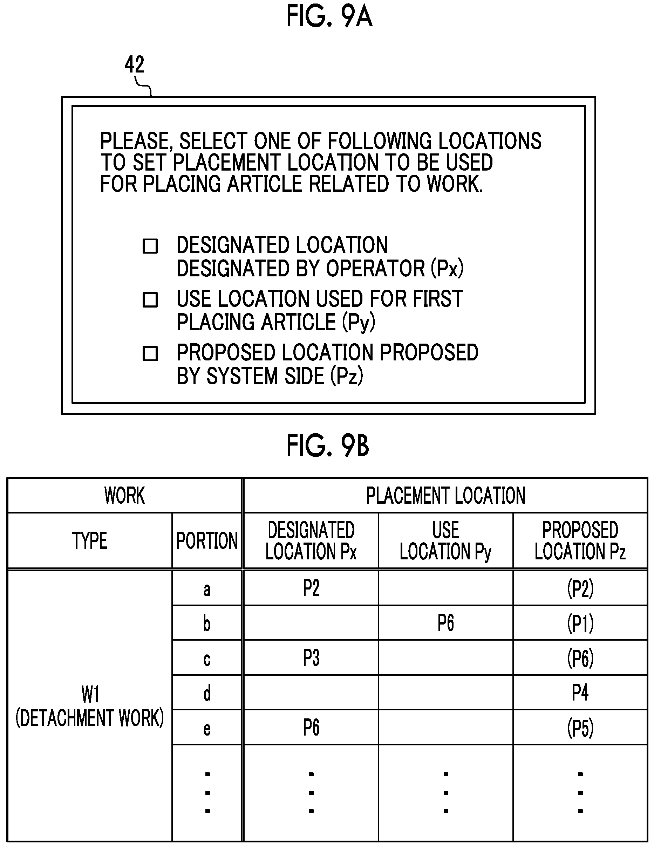

The selection image 42 is an image including message information and a selection item as illustrated in FIG. 9A.

An article related to the work in the selection image 42 directly becomes the detachment component 120 in a case of performing the detachment work W1. Meanwhile, in a case of specifying the placement location P of the detachment component 120, the placement location P may be specified in consideration of placing the tool 180 or the replacement component 160.

In the selection image 42 described above as an example, the operator 9 selects a display portion of a selection item of the designated location (Px), the use location (Py), and the proposed location (Pz) by pointing with the finger 95.

Then, the control unit 26 determines a location selected by the operator 9 in the selection image 42 (step S51). Accordingly, a specific method of the placement location P is determined.

In a case where the designated location (Px) is selected in step S51, information on the location designated by the operator 9 is acquired (step S52).

In this case, the designated location (Px) is designated by, for example, an operation of pointing to a location required by the operator 9 with the finger 95 with respect to the work site 8 of the work displayed on the display unit 21.

In addition, in this case, a range of the designated location (Px) is specified by an operation of drawing a range required by the operator 9. In addition, in a case where the operator 9 points to a required location, the range of the designated location (Px) may be specified by the control unit 26 presenting a certain range centered on the location.

In addition, in a case where the use location (Py) is selected in step S51, information on a location used by the operator 9 for first placing the article 110 related to the work at the work site 8 is acquired (step S53).

In this case, the use location (Py) is determined by the control unit 26 recognizing and analyzing the image information obtained by imaging the location at which the article 110 related to the work is placed in the first work (step) in the work.

In addition, in this case, a range of the use location (Py) is specified by the control unit 26 presenting a certain range centered on the location at which the article 110 is placed.

Further, in a case where the proposed location (Pz) is selected in step S51, the control unit 26 reads out information on the proposed placement location P (step S54).

In this case, the control unit 26 reads out the information on the proposed placement location P set in advance in response to the specified type and portion of work from the storage unit 24.

The proposed location (Pz) is automatically selected and set based on reference information and the like acquired from the work site 8 and a work content or the like of the working target 100. The reference information is a state required in a case of selecting and setting the placement location P. Specifically, the information is information on a relative distance between the operator 9 and the working target 100, a positional relationship, dimensions, or the like of various objects at the work site 8.

In the work support process A, the specifying process of the placement location P is performed, and thus the placement location P is specified and the specified content is managed (step S55).

FIG. 9B illustrates an example of management information on work for each portion and the placement location P assumed in a setting example of this description.

The placement location P is specified for each portion (a to e) of the work. In addition, the proposed location (Pz) is prepared for each of the portions (a to e) of the work.

The placement location P2 is prepared as the proposed location (Pz) for the detachment work W1 (W1a) on the portion a. The actual placement location P is specified as the placement location P2 designated by the operator 9. In this case, there is a relationship in which the specified placement location P2 of the designated location (Px) matches the proposed location (Pz).

The placement location P1 is prepared as the proposed location (Pz) for the detachment work W1 (W1b) on the portion b. The actual placement location P is specified as the placement location P6 used by the operator 9. In this case, there is a relationship in which the specified placement location P6 of the use location (Py) does not match the proposed location (Pz).

The placement location P6 is prepared as the proposed location (Pz) for the detachment work W1 (W1c) on the portion c. The actual placement location P is specified as the placement location P3 designated by the operator 9. In this case, there is a relationship in which the specified placement location P3 of the designated location (Px) does not match the proposed location (Pz).

The placement location P4 is prepared as the proposed location (Pz) for the detachment work W1 (W1d) on the portion d. The actual placement location P is specified as the placement location P4 of the proposed location (Pz). In this case, there is a relationship in which the specified placement location P4 matches the proposed location (Pz).

The placement location P5 is prepared as the proposed location (Pz) for the detachment work W1 (W1e) on the portion e. The actual placement location P is specified as the placement location P6 designated by the operator 9. In this case, there is a relationship in which the specified placement location P6 of the designated location (Px) does not match the proposed location (Pz).

As described above, the specifying process for the placement location is ended.

In addition, the information on the placement location P obtained by the placement location specifying process is stored and saved in the storage unit 24 for a required time.

Next, in the work support process A, it is determined whether or not the specified work is started (step S36 in FIG. 7).

An operation of the determination at this time is repeated until it is determined that the work is started.

### (Display Process of Information on Placement Location)

Then, in the work support process A, in a case where it is determined in step S36 that the work is started, a process of displaying the information on the placement location P is performed (step S37).

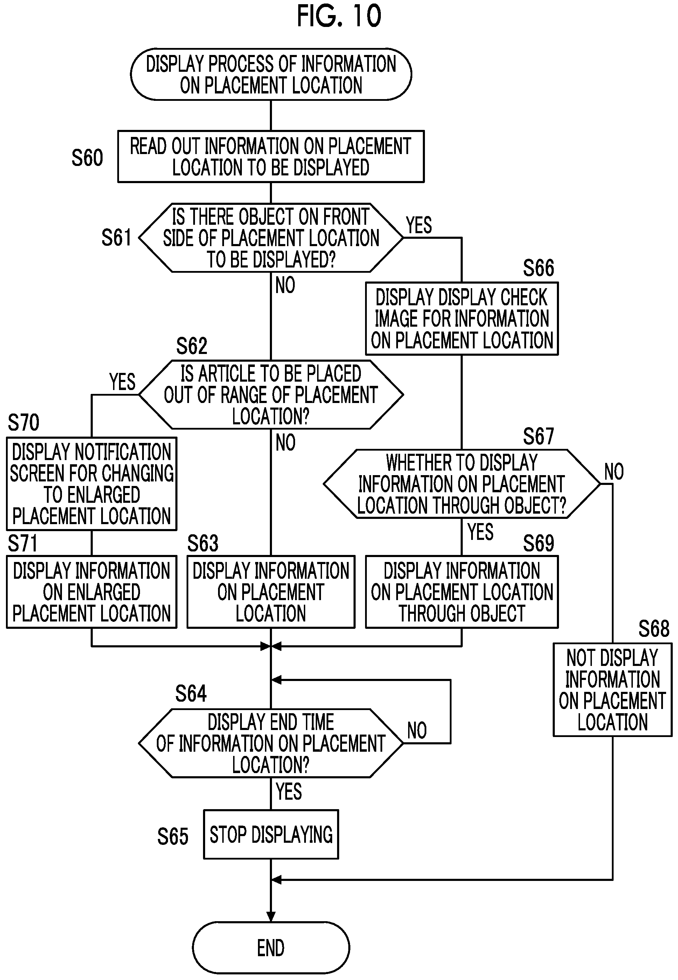

In the display process of the information on the placement location P at this time, the control unit 26 reads out the information on the placement location P to be displayed (step S60 in FIG. 10).

The control unit 26 reads out the placement location P specified for the type and the portion of the work from the information on the placement location P that is stored and managed in the storage unit 24.

In a setting example of this description, since the detachment work W1 on the portion a is performed, information on the placement location P2 specified for the detachment work W1a is read out (see FIG. 9B).

Next, in the display process of the information on the placement location P, it is determined whether or not there is an object on the front side of the placement location P to be displayed (step S61).

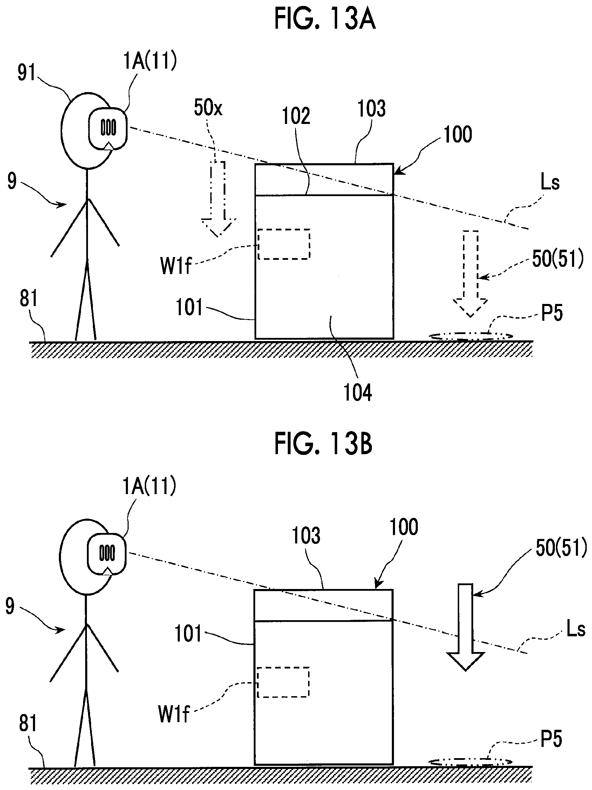

The fact that there is an object on the front side of the display placement location P means a case where the working target 100 is present at a position on the front side of the placement location P5 to be displayed as viewed from the operator 9 (see FIGS. 13A and 13B). In other words, this is a case where an object that hinders the work is present between the operator 9 and the placement location P5 to be displayed.

In a case where it is determined in step S61 that there is no object on the front side of the placement location P to be displayed, the process proceeds to next step S62. In step S62, it is determined whether or not the article 110 related to the work, which is to be placed in the specified placement location P, is out of a range of the placement location P.

The fact that the article 110 is out of the range of the placement location P means that a part of the article 110 related to the work is not completely placed within the range of the specified placement location P. In this case, the part of the article 110 related to the work, which cannot be placed in the placement location P, becomes often an obstacle in a case where the operator 9 moves.

Next, in a case where it is determined that the article 110 is not out of the range of the placement location P specified in step S62, the information on the placement location P is displayed on the display unit 21 (step S63).

At this time, the display is performed on a front side of the existing object such as the working target 100 on the display screen 21a of the display unit 21 (see FIG. 11).

In addition, the display at this time is continued until a time when a display end time of the information on the placement location P is reached (step S64). As the display end time, for example, a time when a predetermined elapse time is reached is applied.

Then, in a case where the display end time of the information on the placement location P is reached, the display of the information on the placement location P is stopped (step S65).

As described above, in the work support process A by the head-mounted device 11, the information on the placement location P specified in a case of starting the work is displayed on the display unit 21 as the support information 50.

Accordingly, the operator 9 does not have to be confused about the location at which the article 110 related to the work is to be placed at the work site 8. For example, in a case where a location at which the article 110 related to the work is to be placed is not prepared in advance, there may be no confusion about the location for placing the article 110.

In addition, with the head-mounted device 11, the location at which the article 110 related to the work is placed is managed as the specified placement location P, in the work support process A. Therefore, the operator 9 does not have to be confused about the location at which the article 110 related to the work is placed.

In the setting example of this description, the operator 9 does not have to be confused about a location at which the detachment component 120 is to be placed or a location at which the detachment component 120 is placed, for the detachment work (W1a).

Next, a portion of a special display process of the information on the placement location P in the work support process A will be described.

First, in a case where it is determined in step S61 that there is an object on the front side of the placement location P to be displayed, a display check image of the information on the placement location P is displayed (step S66 in FIG. 10).

FIGS. 13A and 13B illustrate a case where a detachment work W1f starting from the portion f of the front surface portion 101 of the working target 100 is performed and the placement location P5 is specified for the detachment work W1f.

In the work site 8 illustrated in FIGS. 13A and 13B, the working target 100 is present on the front side of the placement location P5 as viewed from the operator 9. In this case, the placement location P5 is the placement location P that is hidden behind the working target 100 and has a positional relationship that is not visible to the operator 9.

A one-dot chain line Ls in FIGS. 13A and 13B is a line indicating a lower limit of the field of view that can be visually recognized over the working target 100 (on the upper side) of the operator 9.

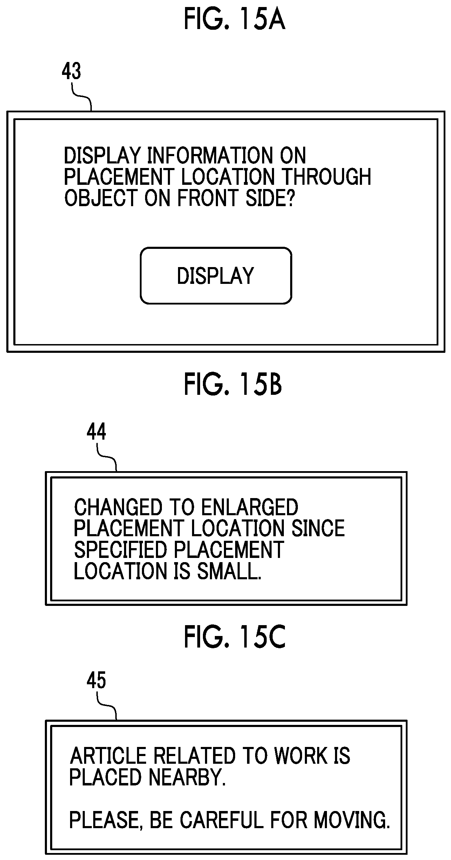

At this time, in the work support process A, the control unit 26 displays a display check image 43 illustrated in FIG. 15A on the display unit 21.

The display check image 43 is an image for checking whether or not the information on the placement location P is displayed through an object (working target 100) on a front side of the placement location P.

The display check image 43 is, for example, an image including message information and a selection item (see FIG. 15A).

In the display check image 43, the selection item of "display" is prepared to check only a case where the operator 9 wants to display.

Then, at this time, the control unit 26 determines a response result of the operator 9 with respect to the display check image 43 (step S67).

At this time, in a case where the operator 9 does not perform any operation on the display check image 43 until a predetermined elapse time is reached, the information on the placement location P to be displayed is not displayed (step S68).

The case of not performing any operation refers to a case where the operator 9 does not point to a portion of the selection item of "display" in the display check image 43 with the finger 95.

In FIG. 13A, a case where the information on the placement location P5 to be displayed is not displayed is illustrated by a broken line.

Accordingly, the display of the information on the placement location P5 as the support information 50 may not interfere with the field of view of the operator 9 who performs the detachment work W1f.

That is, in a case where the information on the placement location P5 as the support information 50 is displayed on the front side of the working target 100 as usual, such display may interfere with the field of view of the operator 9 who performs the detachment work W1f. A display example of support information 50x illustrated by the two-dot chain line in FIG. 13A is an example of displaying on the front side of the working target 100 as usual.

On the other hand, in a case where the operator 9 points to the portion of the selection item of "display" in the display check image 43 with the finger 95, the information on the placement location P to be displayed is displayed through the object (step S69).

In FIG. 13B, a case where the information on the placement location P5 to be displayed is displayed as the support information 50 on a back side of the working target 100 is illustrated.

The display of the information on the placement location P5 at this time is a display in which at least a part of the information is visually recognized by the operator 9. In a case of the display of the support information 50 illustrated in FIG. 13B, a portion below the line Ls indicating a lower limit of the field of view is hidden by the working target 100 on the front side and is not visually recognized by the operator 9.

At least a part of the display of the support information 50 related to the placement location P is visually recognized by the operator 9. At this time, the display of the support information 50 makes it possible to inform the operator 9 of the presence of the placement location P and the like.

Accordingly, even in a case where there is an object on the front side of the placement location P to be displayed and the operator 9 cannot visually recognize the placement location P, the operator 9 can recognize the placement location P, which is not visible, when the operator 9 wants to check the non-visible placement location P.

Next, in a case where it is determined in step S62 that the article 110 related to the work is out of a range of the specified placement location P, a notification image in which the placement location P is changed to an enlarged placement location Pa is displayed (step S70 in FIG. 10).

Whether or not the article 110 related to the work is out of the range of the specified placement location P is determined by the control unit 26, for example, from a result of comparing dimensional information of the detachment component 120 or the like included in the information on the work with information on the range (maximum dimension portion) of the specified placement location P.

In FIG. 15B, a notification image 44 is illustrated.

The notification image 44 is configured with, for example, message information indicating that the specified placement location P is changed to the enlarged placement location Pa.

The enlarged placement location Pa is the placement location P having a relationship in which an area (maximum dimension portion) is larger than an area of the placement location P determined to have an excess portion.

Next, in the work support process A, information on the enlarged placement location Pa is displayed (step S71).

At this time, the control unit 26 selects the enlarged placement location Pa, and displays the information on the display unit 21. In addition, the display of the information on the enlarged placement location Pa is switched and performed after a predetermined elapse time elapses since the notification image is displayed.

A specific example of the enlarged placement location Pa will be described as follows, by using the setting example in FIG. 9B.

In the setting example in FIG. 9B, the operator 9 specifies the placement location P3 for the detachment work W1 on the portion c. In this case, the control unit 26 determines that the specified placement location P3 is, for example, the placement location P smaller than the proposed location (Pz) of the portion c, and displays the notification image 44. Next, the control unit 26 changes the placement location P3 to the placement location P6 that is larger than the placement location P3 and is also the proposed location (Pz). The placement location P6 at this time is the enlarged placement location Pa.

In a case where the placement location Pa is changed to the enlarged placement location Pa, the operator 9 may be not confused since the article 110 related to the work cannot be completely placed in the initially specified placement location P. In addition, in this case, an excess portion of the article 110 related to the work may not become an obstacle in a case where the operator 9 moves.

The information on the placement location P or the enlarged placement location Pa respectively displayed in steps S69 and S71 is displayed until a time when a display end time is reached (steps S64 and S65).

### (Warning Display Process)

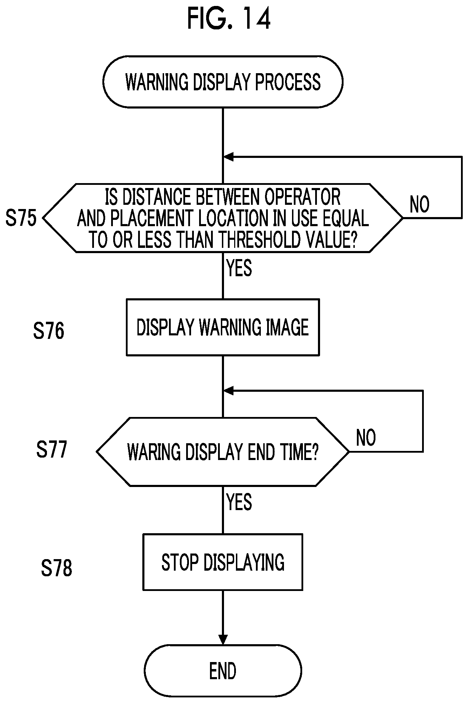

In addition, in the head-mounted device 11, a warning display process is also performed in parallel with the work support process A (see FIG. 14).

In the warning display process, the control unit 26 performs monitoring of whether or not a distance between the operator 9 and the specified placement location P in use is equal to or less than a threshold value (step S75 in FIG. 14).

The distance at this time is a distance between the operator 9 when the operator 9 starts to move and the placement location P in use. In addition, the placement location P in use is the placement location P which is the specified placement location P and on which the article 110 related to the work is actually placed. The threshold value is set to any distance.

The monitoring described above is started and continued in a case where the operator 9 starts the work starts to move.

In a case where it is determined in step S75 that the distance is equal to or less than the threshold value, the warning image is displayed (step S76).

At this time, in the head-mounted device 11, the control unit 26 displays a warning image 45 illustrated in FIG. 15C on the display unit 21.

The warning image 45 is an image including message information or the like for alerting the operator 9.

The display of the warning image 45 at this time is continued until a time when a warning display end time is reached, and is stopped at the time (steps S77 and S78).

As the warning display end time, for example, a time when a predetermined elapse time is reached is applied.

By displaying the warning image 45, the operator 9 can avoid the risk of unintentionally touching the article 110 related to the work at the placement location P.

Then, the description of the work support process A by the head-mounted device 11 will be returned again.

In the work support process A, in a case where the detachment component 120 of the detachment work W1a is placed in the placement location P2, analysis or accumulation of information on a status of the placement location P2 is performed (step S38 in FIG. 7).

At this time, the control unit 26 analyzes and accumulates the information on the status of the placement location P2 by using the information obtained by imaging and detecting the placement location P in step S19.

Accordingly, in the work support process A, the detachment component 120 placed at the placement location P2 is recognized. In addition, in the head-mounted device 11, the information on the status of the placement location P2 is saved in the storage unit 24.

Next, in the work support process A, whether or not the work on the same portion of the same working target 100 continues is determined (step S39).

At this time, in a case where it is determined that the work on the same portion continues, the process returns to step S36, and the subsequent work is performed. In addition, at this time, the operations in and after step S37 related to the work support process A are repeated in the same manner.

On the other hand, in the work support process A, in a case where it is determined in step S39 that the work on the same portion does not continue, whether or not there is work on another different portion is determined (step S40).

At this time, in a case where it is determined that there is work on the other portion, the process returns to step S34, and the work on the other portion is performed. In addition, in this case, the operations in and after step S34 related to the work support process A are repeated in the same manner.

In a case where it is determined in step S40 that there is no work on the other portion, the work on one same working target 100 is ended.

In addition, in this case, the work support process A is also ended.

Meanwhile, the specifying of the placement location P for placing the replacement component 160 or the tool 180, which is an example of the article 110 related to the work, may be performed in consideration of the specifying of the placement location P for placing the detachment component 120.

Meanwhile, the specifying of the placement location P for placing the replacement component 160 or the tool 180 may be performed independently of the specifying of the placement location P for placing the detachment component 120.

### (Case Where Detachment Work on Different Portion Continues)

Next, an operation of the work support system 1A in a case where the detachment work W1b and W1c for the portion b and the portion c continue after the detachment work W1a for the portion a will be described.

In a case where there is work on another portion in step S21 (FIG. 5), the process returns to step S14, and the operation in and after step S14 is repeated in the same manner.

Specifically, in the head-mounted device 11, an operation related to the specifying of the work on the other portion and an operation related to the specifying of the placement location P are performed.

In addition, at this time, in the work support process A, the specifying in step S34 and the specifying process in step S35 illustrated in FIG. 7 are performed.

Here, in a case where the detachment work W1b on the portion b is specified, it is assumed that the placement location P6 of the use location (Py) is specified as the placement location P (see FIG. 9B).

In addition, in a case where the detachment work W1c on the portion c is specified, it is assumed that the placement location P3 of the designated location (Px) is specified as the placement location P (see FIG. 9B).

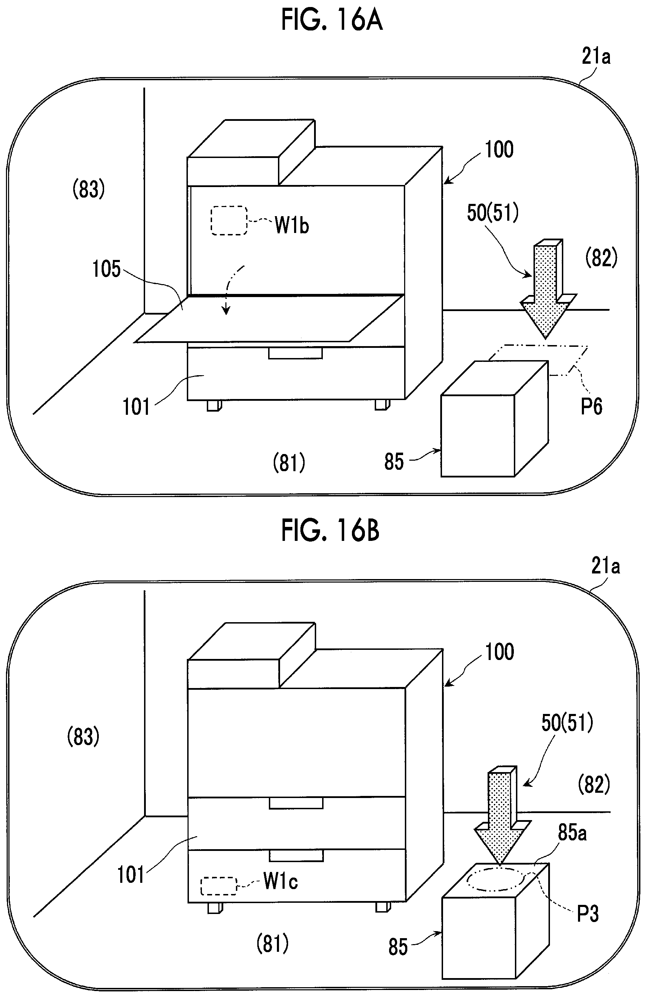

In a case of performing the detachment work W1b, information on the placement location P6 is displayed as the support information 50 on the display screen 21a of the display unit 21 (see step S17 and FIG. 16A).

In a case of performing the detachment work W1c, information on the placement location P3 is displayed as the support information 50 on the display screen 21a of the display unit 21 (see step S17 and FIG. 16B).

In a case where the detachment work W1a, W1b, and W1c on the portion b and the portion c including the portion a described above are respectively ended, in the work support process A, the process in step S38 illustrated in FIG. 7 is performed.

That is, in the work support process A at this time, analysis and accumulation for information on a status of each of the placement locations P2, P6, and P3 are performed.

### (Case of Performing Attachment Work of Detachment Component and the like)

Next, an operation of the work support system 1A in a case where the attachment work W2a, W2b, and W2c of the detachment components 120 and the like on the portions a to c are continuously performed will be described.

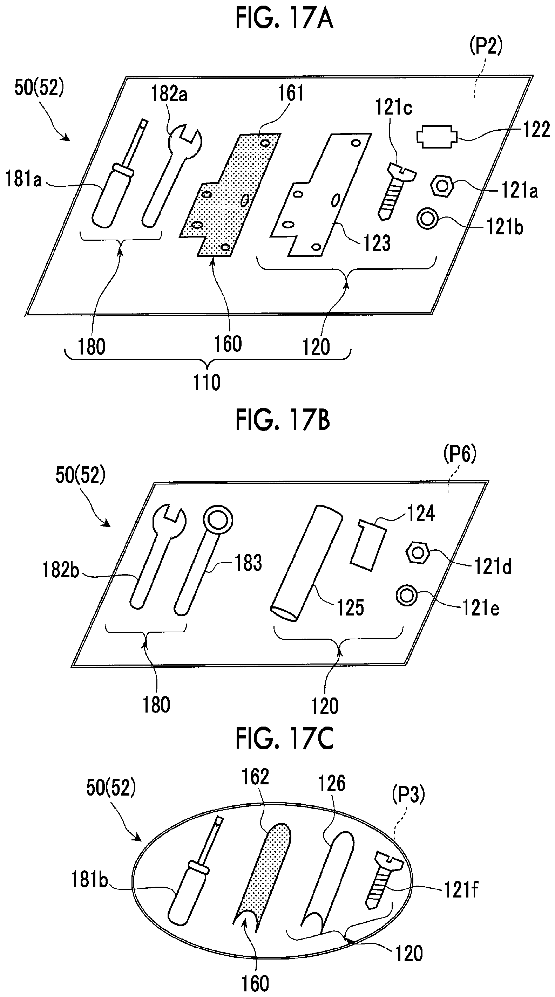

Here, it is assumed that the placement locations P2, P6, and P3 specified in a case where the detachment work W1a, W1b, and W1c on the portions a to c are performed are in each status illustrated in FIGS. 17A to 17C.

That is, it is assumed that five components 121a, 121b, 121c, 122, and 123 and tools 181a and 182a are placed in the placement location P2 as the detachment components 120 in a case of the detachment work W1a (see FIG. 17A). The components 121a, 121b, and 121c are fixing tools such as nuts and screws.

In addition, it is assumed that two tools 181a and 182a used in the detachment work W1a are also placed at the placement location P2.

It is assumed that four components 121d, 121e, 124, and 125 are placed as the detachment components 120 in the placement location P6 in a case of the detachment work W1b (see FIG. 17B). The components 121d and 121e are fixing tools such as nuts.

In addition, it is assumed that two tools 182b and 183 used in the detachment work W1b are also placed in the placement location P6.

It is assumed that two components 121f and 126 are placed as the detachment components 120 in the placement location P3 in a case of the detachment work W1c (see FIG. 17C). The component 121f is a fixing tool such as a screw.

In addition, it is assumed that one tool 181b used in the detachment work W1c is also placed at the placement location P3.

In this setting example, it is assumed that the component 123, which is one of the detachment components 120, is replaced with a replacement component 161. It is assumed that the replacement component 161 is placed at the placement location P2 (see FIG. 17A). The replacement component 161 is automatically recognized by imaging or detection of the head-mounted device 11, for example, in a case where the operator 9 places the replacement component 161 in the placement location P2 after the detachment work W1a.

In addition, in this setting example, it is assumed that the detachment component 120 is not replaced. Therefore, no replacement component for the detachment component 120 is placed in the placement location P6 (see FIG. 17B).

Further, in this setting example, it is assumed that the component 126, which is the detachment component 120, is replaced with the replacement component 162. It is assumed that the replacement component 162 is placed in the placement location P3 (see FIG. 17C). The replacement component 162 is also automatically recognized by imaging or detection of the head-mounted device 11 in a case where the operator 9 places the replacement component 162 in the placement location P3 after the detachment work W1c, for example.

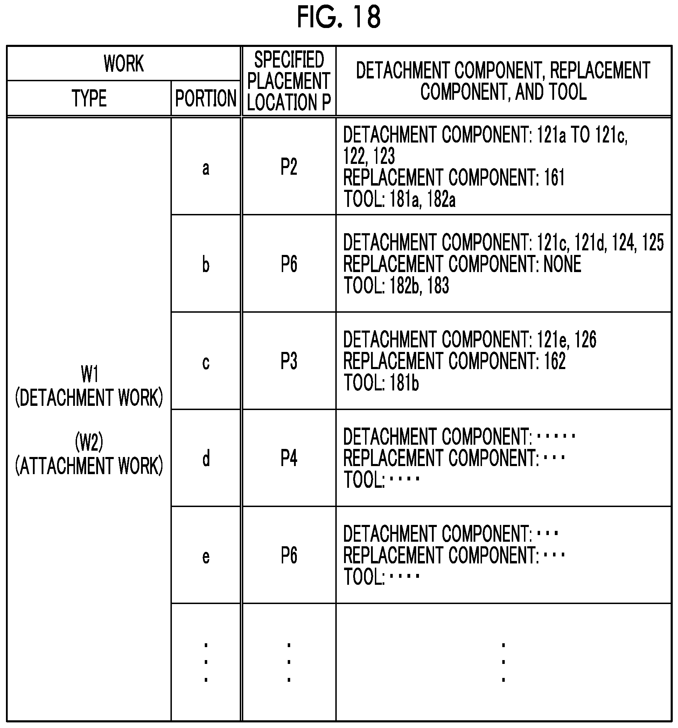

The head-mounted device 11 saves and manages information on each status of the placement locations P2, P6, and P3 at this time in the storage unit 24 (see FIG. 18).

In addition, the head-mounted device 11 also recognizes an order in which the detachment works W1a, W1b, and W1c are performed and a position at which the detachment component 120 is placed in each placement location P.

Then, the head-mounted device 11 operates as follows in a case where the detachment work W1a, W1b, and W1c for the portions a to c are sequentially performed under the setting example of the present description.

### (Attachment Work on Portion c)

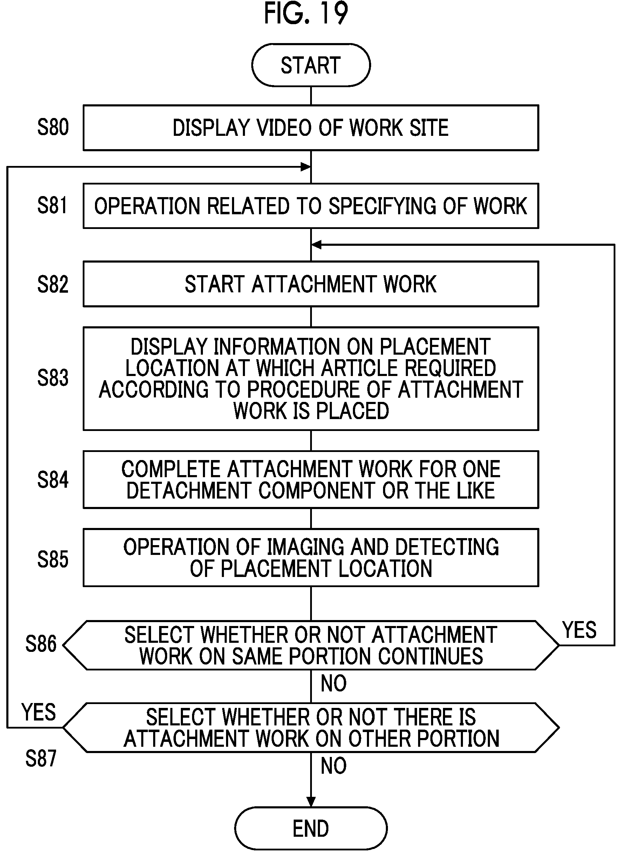

First, the head-mounted device 11 displays a video of the work site 8 on the display unit 21 (step S80 in FIG. 19).

Next, an operation related to specifying of work is performed (step S81).

In a setting example, for example, it is assumed that the attachment work W2c for the portion c on which the last detachment work W1c is performed is specified.

In the head-mounted device 11, in a case where the attachment work W2c is started (step S82), information on the placement location P is displayed (step S83).

The placement location P at this time is a placement location in which the article 110 related to the work, which is required according to a procedure of the attachment work, is placed. The information on the placement location P is displayed on the display unit 21 as the support information 50.

In the attachment work W2c, the detachment component 120 corresponds to the article 110 related to the work, which is required in the procedure of the attachment work W2c. In addition, in the attachment work W2c, the replacement component 162 to be attached instead of the detachment component 126 is a component that is first required in the attachment work W2c.

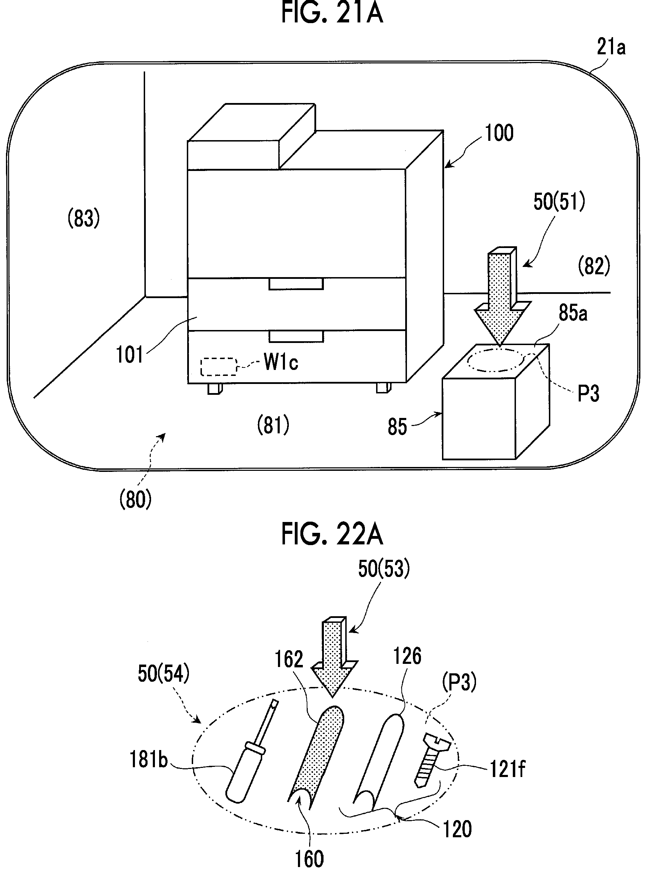

Therefore, in the setting example, information on the placement location P3 at which the replacement component 162 is placed is displayed on the display unit 21 as the support information 50 (see FIG. 21A).

The support information 50 illustrated in FIG. 21A is displayed as information consisting of the mark 51 of an arrow indicating a location of the placement location P3.

The support information 50 at this time may be displayed as information consisting of a mark 53 of an arrow indicating the replacement component 162 that is first required in the attachment work W2c (see FIG. 21B). In a case where the support information 50 is displayed as the information consisting of the mark 53, the operator 9 can quickly recognize an article (replacement component 162) required for the attachment work W2.

In addition, the support information 50 at this time may be displayed, together with information consisting of a three-dimensional image 54 in which the placement location P3 is represented in three dimensions (see FIG. 21B).

Accordingly, the head-mounted device 11 performs work support of informing the operator 9 of a location at which the article 110 related to the work, which is required according to the procedure of the attachment work, is placed at the work site 8.

In addition, it is possible to address a problem in that the operator 9 does not recognize where to place the component or the like to be attached in the attachment work at the work site 8. As a result, efficiency of the attachment work can be improved.

Next, the attachment work for one detachment component 120 (including the replacement component 160) is completed (step S84).

Then, the head-mounted device 11 performs an operation of imaging and detecting the placement location P (step S85).

In the setting example, the attachment work W2c of attaching the replacement component 162 to the portion c is completed. Thereafter, the imaging unit 22 and the detection unit 23 of the head-mounted device 11 perform imaging and detecting on the placement location P3.

Accordingly, in the head-mounted device 11, information on a status (change) of the placement location P is acquired each time one work in the attachment work is completed.

Next, in the head-mounted device 11, each time one work in the attachment work is completed, whether or not the attachment work on the same portion continues is selected (determined) (step S86).

In the setting example, the work on the same portion is the attachment work W2 on the portion c.

At this time, the selection is performed, for example, by displaying a check image related to whether or not the attachment work on the same portion continues on the display unit 21 by the control unit 26 and determining a selection result of the operator 9.

In a case where it is selected in step S86 that the attachment work on the same portion continues, the process returns to step S82, and the operation described above in and after step S82 is repeated in the same manner.

In this case, the subsequent attachment work is performed, and the head-mounted device 11 is operated in the same manner.

In the setting example, the attachment work for the detached component 121f as a fixing tool is performed as the subsequent work.

In this case, in a case where the attachment work W2c for the component 121f is started (step S82), the information on the placement location P3 at which the component 121f is placed is displayed (step S83).

At this time as well, the information on the placement location P3 at which the component 121f is placed is displayed on the display unit 21 as the support information 50 (see FIGS. 21A and 21B).

In addition, in a case where the attachment work W2c for the component 121f is completed, whether or not to the attachment work W2 on the portion c continues is selected (step S86).

In the setting example, since the attachment work W2c for the component 121f is the last, it is selected that the attachment work W2c does not continue.

On the other hand, in a case where it is selected in step S86 that the attachment work on the same portion does not continue, whether or not there is attachment work on another different portion is selected (step S87).

In the setting example, whether or not the attachment work W2 on a portion (any portion of a and b) other than the portion c is selected.

In addition, the selection at this time is performed, for example, by the control unit 26 displaying a check image as to whether or not the attachment work on the other portion continues on the display unit 21 and determining a selection result of the operator 9.

In a case where it is selected in step S87 that there is no attachment work on another portion, the attachment work for one same working target 100 is ended.

On the other hand, in a case where it is selected in step S87 that the attachment work for another portion is present, the process returns to step S81, and the operation described above in and after step S81 is repeated in the same manner.

In this case, the attachment work for the other portion is performed, and the head-mounted device 11 is operated in the same manner.

Here, the setting is made such that the attachment work W2b on the portion b and the attachment work W2a on the portion a continue after the attachment work W2c on the portion c.

In addition, in this case, it is assumed that the attachment work W2b is specified first in step S81, and then the attachment work W2a is specified.

### (Attachment Work on Portion b)

In this setting example, in a case where the attachment work W2b is started (step S82), the information on the placement location P at which the article 110 related to the work, which is required in the procedure of the work, is placed is displayed (step S83).

In the attachment work W2b, the detachment component 120 corresponds to the article 110 related to the work that is first required in the procedure of the attachment work W2b.

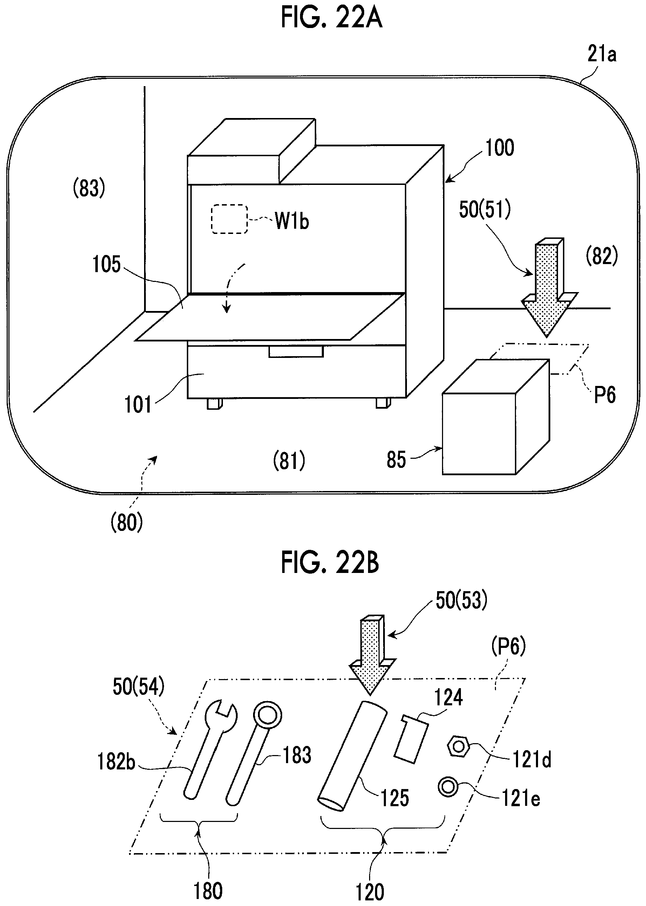

Therefore, in the setting example, information on the placement location P6 at which the component 125 is placed is displayed on the display unit 21 as the support information 50 (see FIG. 22A).

The support information 50 illustrated in FIG. 22A is displayed as information consisting of the mark 51 of an arrow indicating a location of the placement location P6.

The support information 50 at this time may be displayed as information consisting of the mark 53 of an arrow indicating the detachment component 120 that is first required in the procedure of the attachment work W2b (see FIG. 22B).

In addition, the support information 50 at this time may be displayed, together with information consisting of the three-dimensional image 54 in which the placement location P6 is represented in three dimensions (see FIG. 22B).

Next, the attachment work of one detachment component 120 or the like of the attachment work W2b is completed (step S84).

In this case as well, the head-mounted device 11 performs the operation of imaging and detecting the placement location P6 (step S85).

Next, in the head-mounted device 11, each time one work in the attachment work W2b is completed, whether or not the attachment work on the same portion continues is selected (step S86).

In the setting example, the work on the same portion is the attachment work W2 on the portion b.

In a case where it is selected that the attachment work W2b on the portion b continues, the process returns to step S82, and the operation described above in and after step S82 is repeated in the same manner.

In the setting example, the attachment work W2b for the other component 124 of the detachment component 120 is the subsequent work.

In this case, in a case where the attachment work W2b of the component 124 is started (step S82), the information on the placement location P6 at which the component 124 is placed is displayed (step S83).

At this time, the information on the placement location P6 at which the component 124 is placed is displayed on the display unit 21 as the support information 50 (see FIGS. 22A and 22B).

In the case of the setting example, even after the attachment work W2b for the component 124 is completed, the attachment work W2b for the other components 121d and 121e of the detachment component 120 is sequentially performed.

In addition, in this case, the information on the placement location P6 at which the components 121d and 121e are placed is displayed each time the attachment work W2b for the components 121d and 121e is started (step S83).

Further, in this case, in a case where all of the work of the attachment work W2b is ended, it is selected in step S87 that the attachment work W2a on the portion a is to be performed. In this case as well, the process returns to step S81, and the operation described above in and after step S81 is repeated in the same manner.

### (Attachment Work on Portion a)

In this setting example, in a case where the attachment work W2a is started (step S82), the information on the placement location P at which the article 110 related to the work, which is required in the procedure of the work, is placed is displayed (step S83).

In the attachment work W2a, the detachment component 122 corresponds to the article 110 related to the work that is first required in the procedure of the attachment work W2a.

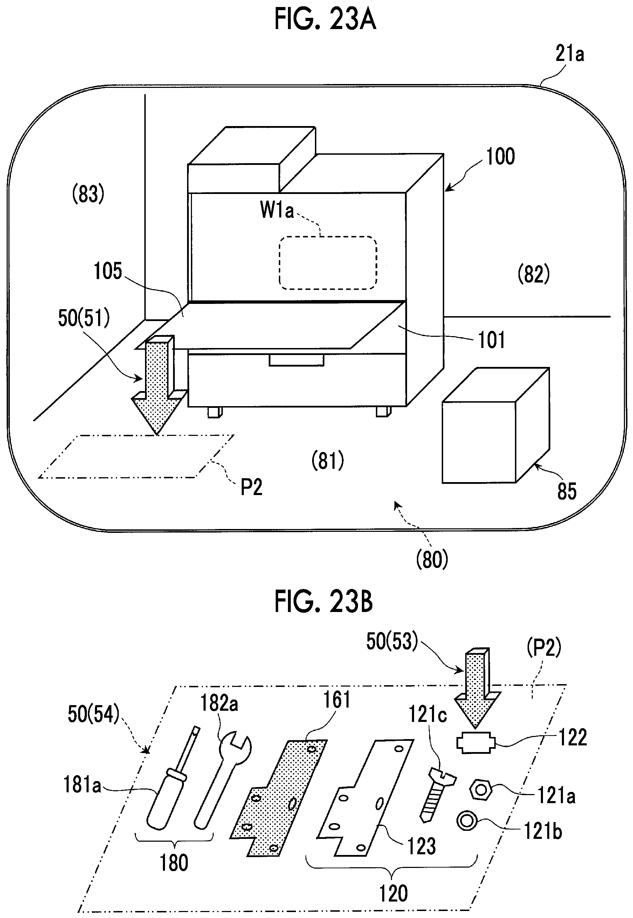

Therefore, in the setting example, the information on the placement location P2 on which the detachment component 122 is placed is displayed on the display unit 21 as the support information 50 (see FIG. 23A).

The support information 50 illustrated in FIG. 23A is displayed as information consisting of the mark 51 of an arrow indicating a location of the placement location P2.

The support information 50 at this time may be displayed as information consisting of the mark 53 of an arrow indicating the detachment component 122 that is first required in the procedure of the attachment work W2a (see FIG. 23B).

In addition, the support information 50 at this time may be displayed, together with information consisting of the three-dimensional image 54 in which the placement location P2 is represented in three dimensions (see FIG. 23B).

Next, the attachment work of one detachment component 120 or the like of the attachment work W2a is completed (step S84).

In this case as well, the head-mounted device 11 performs the operation of imaging and detecting the placement location P2 (step S85).

Next, in the head-mounted device 11, each time one work in the attachment work W2a is completed, whether or not the attachment work on the same portion continues is selected (step S86).

In the setting example, the work on the same portion is the attachment work W2 on the portion a.

In a case where it is selected that the attachment work W2a on the portion a continues, the process returns to step S82, and the operation described above in and after step S82 is repeated in the same manner.

In the setting example, the attachment work W2a for the replacement component 161 of the other component 123 of the detachment component 120 is the subsequent work.

In this case, in a case where the attachment work W2a of the replacement component 161 is started (step S82), the information on the placement location P2 at which the replacement component 161 is placed is displayed (step S83).

At this time as well, the information on the placement location P2 at which the replacement component 161 is placed is displayed on the display unit 21 as the support information 50 (see FIG. 23).

In addition, in the setting example, even after the attachment work W2a for the replacement component 161 is completed, the attachment work W2a for the other components 121a, 121b, and 121c of the detachment component 120 is sequentially performed.

In addition, each time the attachment work W2a of the components 121a, 121b, and 121c is started, the information on the placement location P2 at which the components 121a, 121b, and 121c are placed is displayed (step S83).

Further, in the setting example, in a case where all of the work of the attachment work W2a are ended, it is selected in step S86 that the attachment work W2a on the portion a does not continue.

After that, in the setting example, it is selected in step S87 that there is no attachment work on another different portion.

As described above, all of the attachment work W2a, W2b, and W2c set in the above setting example are ended.

### (Work Support Process B)

Next, an operation of a work support process B by the head-mounted device 11 of the work support system 1A will be described in detail.

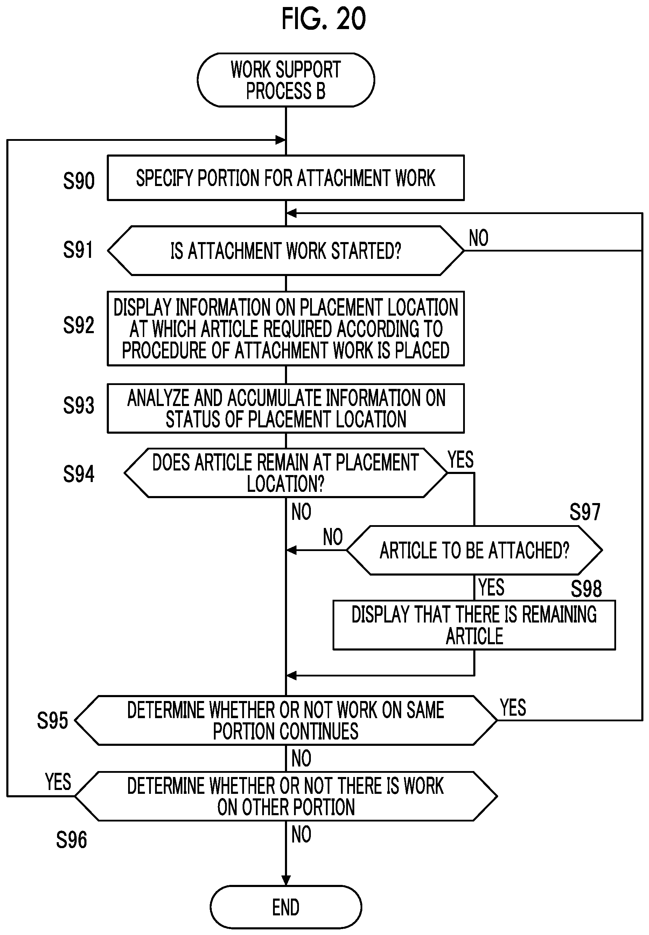

In the work support process B, first, a portion on which an attachment work is to be performed is specified (step S90 in FIG. 20).

In a setting example described above, the portion c of the attachment work W2 of the working target 100 is first specified. In addition, in the setting example, after the attachment work W2c on the portion c is ended, the portion b and the portion a of the attachment work W2 are specified in this order.

Next, in the work support process B, it is determined whether or not the attachment work on the specified portion is started (step S91 in FIG. 20).

The operation of the determination at this time is repeated until it is determined that the attachment work is started.

In the work support process B, in a case where the attachment work W2 is started, information on the placement location P is displayed (step S92).

The placement location P at this time is a placement location on which the article 110 related to the work, which is required according to a procedure of the attachment work W2, is placed. At this time, the control unit 26 displays the information on the corresponding placement location P on the display unit 21 as the support information 50.

The display at this time is a content as described as the support information 50 in FIGS. 21A to 23B.

Next, in the work support process B, analysis or accumulation of information on a status (change) of the placement location P after the attachment work W2 is started is performed (step S93).

At this time, the control unit 26 analyzes or accumulates information on the status of the placement location P based on information obtained by imaging and detecting the placement location P in step S85.

Accordingly, the head-mounted device 11 recognizes an object removed from the placement location P for being used in the attachment work W2. In addition, the information on the status of the placement location P at this time is saved in the storage unit 24.

Next, in the work support process B, it is determined whether or not the article 110 related to the work remains at the placement location P (step S94).

The placement location P at this time is a placement location handled in the attachment work W2.

In addition, the remaining article 110 related to the work is one of the detachment component 120 or the replacement component 160 or both.

In this case, whether or not the article 110 related to the work remains is determined by the control unit 26 based on the information on the status of the target placement location P.

In the work support process B, in a case where it is determined in step S94 that the article 110 related to the work does not remain, whether or not the attachment work on the same portion continues is determined (step S95).

In a case where it is determined in step S95 that the attachment work on the same portion continues, the process returns to step S91, and the operation described above in and after step S91 is repeated in the same manner.

In addition, in the work support process B, in a case where it is determined in step S95 that the attachment work on the same portion does not continue, whether or not there is attachment work on another portion is determined (step S96).

At this time, in a case where it is determined that the attachment work on the other portion is present, the process returns to step S90, and the operation described above in and after step S90 is repeated in the same manner.

In this case, the work support process B for the attachment work on the other portion is performed.

On the other hand, in the work support process B, in a case where it is determined in step S96 that there is no attachment work on another portion, the work support process B for one same working target 100 is ended.

In addition, in the work support process B, in a case where it is determined in step S94 that the article 110 related to the work remains, whether or not the remaining article 110 related to the work is an article to be attached is determined (step S97).

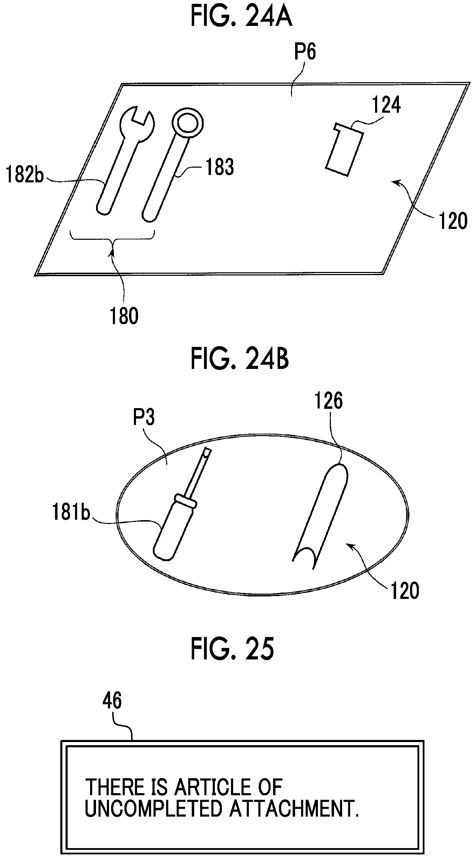

Here, FIGS. 24A and 24B illustrate a specific example of a case where the article 110 related to the work remains at the placement location P.

FIG. 24A illustrates a case where the component 124, which is one of the detachment components 120, remains in the placement location P6 in a case of performing the attachment work W2b.

FIG. 24B illustrates a case where the component 126, which is one of the detachment components 120, remains in the placement location P3 in a case of performing the attachment work W2c.

In a case where it is determined in step S97 that the remaining article 110 related to the work is an article is to be attached, the work support process B displays that there is a remaining article (step S98).

In this case, the control unit 26 displays a second notification image 46 on the display unit 21 (see FIG. 25). The second notification image 46 is, for example, an image including message information or the like for notifying that there is a remaining article.

In the specific example illustrated in FIG. 24A, the component 124, which is one of the detachment components 120, corresponds to the article to be attached.

In a case where the second notification image 46 is displayed, the operator 9 performs the attachment work W2 for the remaining detachment component 120 or replacement component 160 or both of the remaining detachment component 120 and replacement component 160 to complete the work.

Therefore, in a case where the second notification image 46 is displayed, the attachment work W2 is prevented from being incomplete.

On the other hand, in the head-mounted device 11, in a case where it is determined in step S97 that the remaining article 110 related to the work is not an article to be attached, the process proceeds to the process in step S95.

Specifically, since the remaining component 126 in the specific example illustrated in FIG. 24B is replaced with the replacement component 162, the remaining component 126 is an article that does not need to be attached.

The component 126 that does not need to be attached can be referred to as, for example, a detachment component that does not need to be attached.

In this case, the attachment work W2 may not be unnecessarily delayed due to the confusion in handling the unrequired detachment component 120.

### Exemplary Embodiment 2.

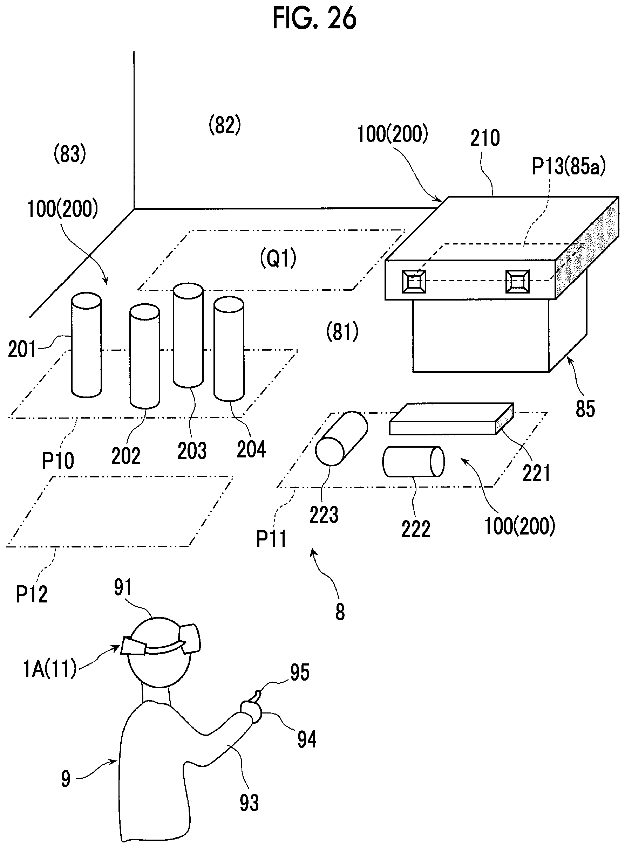

FIG. 26 is a diagram illustrating an example of a work support system and a work site according to Exemplary Embodiment 2 of the present invention.

The work support system 1A according to Exemplary Embodiment 2 has the same manner as the work support system 1A according to Exemplary Embodiment 1, except that the work support system 1A according to Exemplary Embodiment 2 also has a configuration used at the work site 8 at which assembly work is performed.

In the work site 8 illustrated in FIG. 26, a state where assembly components 200, which are also examples of the working target 100, is placed is illustrated.

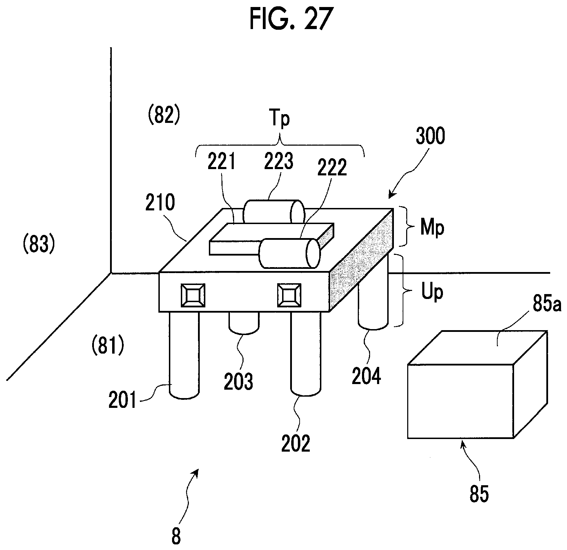

In a case of using the assembly components 200, a complete unit 300 illustrated in FIG. 27 is assembled.

The complete unit 300 is substantially configured with three portions of a lower portion Up, an intermediate portion Mp, and an upper portion Tp.

The lower portion Up is configured with four assembly components 201, 202, 203, and 204. The assembly components 201, 202, 203, and 204 are, for example, components consisting of a cylindrical shape in appearance.

The intermediate portion Mp is configured with one assembly component 210. The assembly component 210 is, for example, a component consisting of a three-dimensional shape with a box shape in appearance.

The upper portion Tp is configured with three assembly components 221, 222, and 223. The assembly component 221 is, for example, a component consisting of a three-dimensional shape with a plate shape in appearance. Both the assembly components 222 and 223 are, for example, components consisting of a cylindrical shape in appearance.

### (Use and Operation of Work Support System)

Next, a use and an operation of the work support system 1A according to Exemplary Embodiment 2 will be described.

In the following, it is assumed that the work site 8 is the same site as the work site 8 described in Exemplary Embodiment 1. It is assumed that, in the work site 8, the peripheral object 85 is placed at one location on the floor 81.

In addition, it is assumed that following four placement locations P10 to P13 can be adopted as the placement locations P for placing the assembly components 200 in the work site 8 (see FIG. 26).

The placement location P10 is a part (rectangular area) of the floor 81 on a left front side of the peripheral object 85 as viewed from a position of the operator 9 illustrated in FIG. 26.

The placement location P11 is a part (rectangular area) of the floor 81 that is close to a front side of the peripheral object 85 as viewed from the operator 9.

The placement location P12 is a part (rectangular area) of the floor 81 on a front side of the placement location P10 as viewed from the operator 9.

The placement location P13 is the planar upper surface portion 85a of the peripheral object 85. The placement location P13 is a location with the smallest area as compared with the other placement locations P.

In addition, reference numeral Q1 in FIG. 26 indicates an assembly location. The assembly location Q1 is set to a location (for example, a part of the floor 81) at which assembly work is to be easily performed.

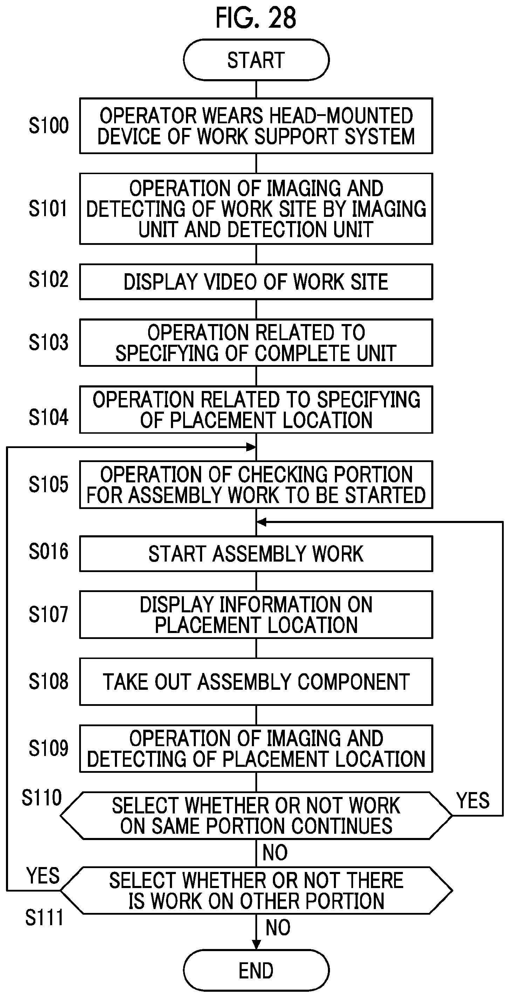

First, the operator 9 wears the head-mounted device 11 on the head portion 91 to use the work support system 1A (step S100 in FIG. 28).

Next, the head-mounted device 11 performs imaging and detecting of the work site 8 by the imaging unit 22 and the detection unit 23 (step S101).

Next, the head-mounted device 11 displays the video 80 of the work site 8 captured by the imaging unit 22 on the display unit 21 (step S102).

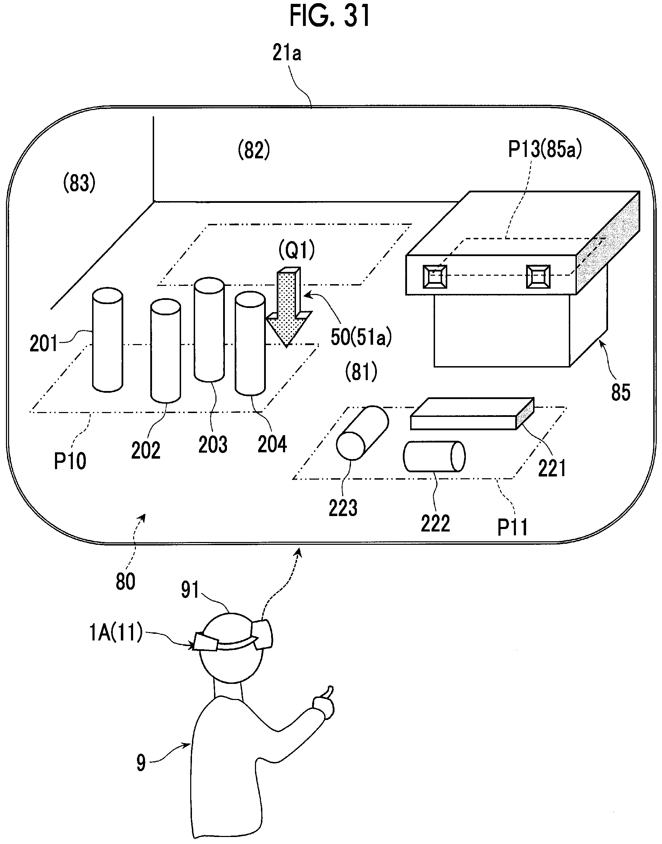

The video 80 at this time is displayed on the display screen 21a of the display unit 21 (see FIG. 31).

In addition, in the work site 8 illustrated in FIG. 26, the assembly components 200 are placed. Meanwhile, the assembly component 200 are not placed at the work site 8 at a use start stage.

Next, in the head-mounted device 11, an operation related to specifying of the complete unit 300 is performed (step S103).

The operation related to the specifying of the complete unit 300 is an operation for specifying a type (a model name or the like) of the complete unit 300 to be assembled.

The operation related to the specifying is manually performed by the operator 9 selecting a specific image displayed on the display unit 21.

Next, in the head-mounted device 11, an operation related to specifying of the placement location P is performed (step S104).

The placement location P at this time is a location for placing the assembly component 200 used in the complete unit 300.

The operation or process related to the specifying of the placement location P is performed in the same manner as the placement location specifying process (see FIG. 8) in Exemplary Embodiment 1.

In the specifying process of the placement location P at this time as well, the control unit 26 displays the selection image 42 on the display unit 21, from which a method of specifying the placement location P can be selected (step S50 in FIG. 8).

Next, the control unit 26 determines a location selected by the operator 9 in the selection image 42 (see FIG. 9A) (step S51).

In the selection image 42, it is possible to select any location of the designated location (Px), the use location (Py), and the proposed location (Pz) as the placement location P. In this case, the specific method of the placement location P is determined by the operator 9 performing a selection operation on the display screen of the selection image 42.

At this time, in a case where the designated location (Px) is selected, the designated location at which the operator 9 wants to place the assembly component 200 is specified as the placement location P (step S52).

In addition, in a case where the use location (Py) is selected, a location used for the operator 9 to actually place the assembly component 200, which is also the article 110 related to the work, at the work site 8 is specified as the placement location P (step S53).

Further, in a case where the proposed location (Pz) is selected, the placement location P proposed by the control unit 26 is specified as the placement location P (step S54).

In the head-mounted device 11, the specifying process of the placement location P is performed, and thus the placement location P is specified and the specified content is managed (step S55).

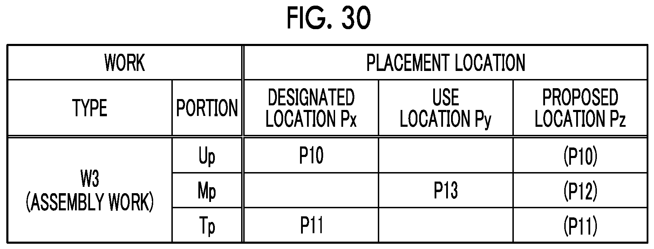

FIG. 30 illustrates an example of management information on an assembly component and the placement location P for each portion assumed in the setting example.

The placement location P is specified for each portion (Up, Mp, and Tp) of the assembly work. In addition, the proposed location (Pz) is prepared for each portion (Up, Mp, and Tp) of the assembly work.

The placement location P10 is prepared as the proposed location (Pz) for assembly work W3 on the lower portion Up. The actual placement location P is specified as the placement location P10 designated by the operator 9. In this case, there is a relationship in which the specified placement location P10 of the designated location (Px) matches the proposed location (Pz).

The placement location P12 is prepared as the proposed location (Pz) for the assembly work W3 on the intermediate portion Mp. The actual placement location P is specified as the placement location P13 used by the operator 9. In this case, there is a relationship in which the specified placement location P13 of the use location (Py) does not match the proposed location (Pz).

The placement location P11 is prepared as the proposed location Pz for the assembly work W3 on the upper portion Tp. The actual placement location P is specified as the placement location P11 designated by the operator 9. In this case, there is a relationship in which the specified placement location P11 of the designated location (Px) matches the proposed location (Pz).

As described above, the specifying process for the placement location is ended.

The information on the placement location P obtained by the placement location specifying process is stored and saved in the storage unit 24 for a required time.

In addition, in this setting example, the assembly components 200 are placed at the specific placement locations P as illustrated in FIG. 31.

Specifically, the assembly components 201 to 204 for assembly of the lower portion Up are placed at the placement location P10. The assembly component 210 for assembly of the intermediate portion Mp is placed on the placement location P13. The assembly components 221 to 223 for assembly of the upper portion Tp are placed on the placement location P11.

Next, in the head-mounted device 11, an operation related to checking a portion for the assembly work to be started is performed (step S105 in FIG. 28).

The portion of the assembly work to be started is a portion of the assembly work to be started based on a procedure of the assembly work. In the case of the complete unit 300, the portion of the assembly work to be started is the lower portion Up.

The operator 9 checks the portion of the assembly work to be started by viewing a check image displayed on the display unit 21 by the control unit 26.

The check image is, for example, an image including message information or illustration information for informing of the corresponding portion. In addition, the check screen is displayed in a case where the operation related to the specifying of the complete unit 300 is ended.

In a case where the specifying of the placement location P and the checking of the portion of the assembly work to be started are completed by the head-mounted device 11, the operator 9 starts the assembly work W3 (step S106).

Then, in the head-mounted device 11, in a case where the assembly work W3 of a predetermined portion is started, information on the specified placement location P is displayed as the support information 50 on the display unit 21 (see step S107 and FIG. 31).

The display of the information on the placement location P at this time is performed under the control of the control unit 26.

In the setting example, the predetermined portion is the lower portion Up.

The information on the placement location P illustrated in FIG. 31 is information consisting of a mark 51a of an arrow indicating a location of the placement location P10.

For the information on the placement location P, information consisting of a three-dimensional image 52 (see FIG. 12) in which the placement location P is represented in three dimensions may be displayed.

In addition, the information on the placement location P may be displayed as information obtained by combining the information on the mark 51a and the information on the three-dimensional image 52.

Next, the operator 9 takes out the assembly component 200 from the specified placement location P, and performs the assembly work W3 (step 108).

In the setting example, first, the assembly work W3 of the lower portion Up is performed, so that one of the assembly components 201 to 204 required for the assembly of the lower portion Up is taken out from the placement location P10. The assembly components 201 to 204 are first taken out from the component 201.

At this time, the operator 9 can check the information on the placement location P in which the assembly component 200 required for the assembly work W3 is placed through the display unit 21 of the head-mounted device 11 immediately before the assembly component 200 is taken out.

Accordingly, the operator 9 can recognize which placement location P the assembly component 200 required according to the procedure of the assembly work W3 is placed at.

Next, in the head-mounted device 11, imaging and detecting of the placement location P are performed after the assembly work W3 is started (step S109).

At this time, the imaging and the detecting of the placement location P are automatically performed in accordance with an operation of the operator 9 wearing the head-mounted device 11.

Accordingly, in the head-mounted device 11, information for grasping the status (change) of the placement location P is obtained.

Next, in the head-mounted device 11, each time one work in the assembly work W3 is completed, whether or not the assembly work on the same portion continues is selected (determined) (step S110).

In a setting example of this description, the work on the same portion is the assembly work W3 on the lower portion Up.

The completion of one work in the assembly work W3 at this time is recognized by, for example, determining information such as an input operation of the operator 9.

At this time, the selection is performed, for example, by displaying a check image related to whether or not the assembly work on the same portion continues on the display unit 21 by the control unit 26 and determining a selection result of the operator 9.

In a case where it is selected in step S110 that the assembly work on the same portion continues, the process returns to step S106, and the operation described above in and after step S106 is repeated in the same manner.

In this case, the subsequent assembly work is performed, and the head-mounted device 11 is operated in the same manner.

In the setting example, in a case where the subsequent assembly work W3 on the lower portion Up is started (step S106), information on the placement location P10 as the support information 50 is displayed (step S107). Subsequently, the assembly component 200 (actually, the assembly component 202) required for the subsequent assembly work W3 is taken out from the specified placement location P10 (step S108). After that, the imaging and the detecting of the placement location P10 are performed (step S109).

On the other hand, in a case where it is selected in step S110 that the assembly work W3 on the same portion does not continue, whether or not there is assembly work on another different portion is selected (step S111).

In the setting example, it is checked whether or not the assembly work W3 is performed on a portion (any portion of the intermediate portion Mp and the upper portion Tp) other than the lower portion Up.

In addition, the selection at this time is performed, for example, by the control unit 26 displaying a check image as to whether or not the assembly work on the other portion continues on the display unit 21 and determining a selection result of the operator 9.

In a case where it is selected in step S111 that there is work on the other portion, the process returns to step S105, and the operation described above in and after step S105 is repeated in the same manner.

In this case, the assembly work for the other portion is performed, and the head-mounted device 11 is operated in the same manner.

In the setting example, an operation related to checking the intermediate portion Mp of the assembly work W3, which is the other portion, is performed (step S105). Next, the assembly work W3 on the intermediate portion Mp is started (step S106).

In a case where the assembly work W3 on the intermediate portion Mp is started, information on the placement location P for the assembly work W3 on the intermediate portion Mp is displayed (step S107).

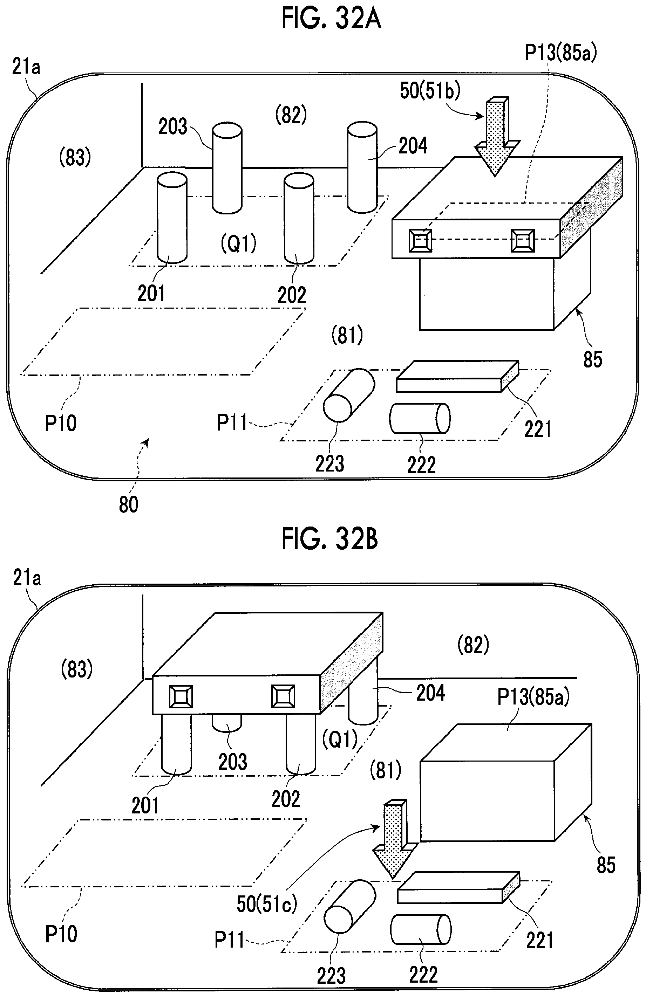

In this setting example, the information on the placement location P13 is displayed on the display unit 21 as the support information 50 as illustrated in FIG. 32A. The support information 50 illustrated in FIG. 32A is information consisting of a mark 51b of an arrow indicating a location of the placement location P13.

Subsequently, the assembly component 210 required for the assembly work W3 on the intermediate portion Mp is taken out from the specified placement location P13 (step S108). After that, the imaging and the detecting of the placement location P13 are performed (step S109).

Next, in the setting example, an operation related to checking the upper portion Tp of the assembly work W3, which is the next different portion, is performed (step S105). Next, the assembly work W3 on the upper portion Tp is started (step S106).

In a case where the assembly work W3 on the upper portion Tp is started, information on the placement location P for the assembly work W3 on the upper portion Tp is displayed (step S107).

In this setting example, as illustrated in FIG. 32B, the information on the placement location P11 is displayed on the display unit 21 as the support information 50. The support information 50 illustrated in FIG. 32B is information consisting of a mark 51c of an arrow indicating a location of the placement location P11.

Subsequently, the assembly components 221 to 223 required for the assembly work W3 on the upper portion Tp are taken out from the specified placement location P11 (step S108). After that, the imaging and the detecting of the placement location P11 are performed (step S109).

On the other hand, in a case where it is selected in step S111 that there is no work on another portion, the assembly work W3 is ended.

As a result, the complete unit 300 (see FIG. 27) is completed at the assembly location Q1.

### (Work Support Process C)

Next, an operation of a work support process C by the head-mounted device 11 of the work support system 1A will be described in detail.

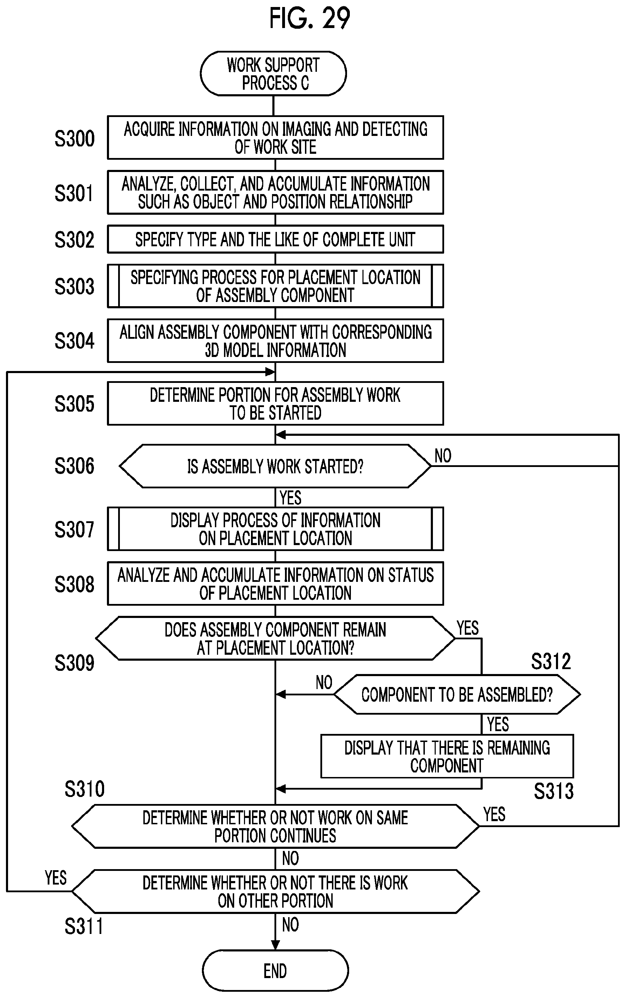

The work support process C starts with acquisition of information on imaging and detecting of the work site 8 (step S300 in FIG. 29), in the same manner as the work support process A (see FIG. 7) in Exemplary Embodiment 1.

Next, in the work support process C, analysis, collection, and accumulation of information such as an object at the work site 8 and a positional relationship are performed (step S301).

Next, in the work support process C, a type and the like of the complete unit 300 are specified (step S302).

The specifying at this time is performed by the operator 9 selecting a specific image displayed on the display unit 21 with a manual operation, as described above. In this case, the specifying is performed by the control unit 26 determining a result of a selection operation of the operator 9 for the specific image.

Next, in the work support process C, a specifying process for the placement location P of the assembly component 200 is performed (step S303).

The specifying process for the placement location P at this time is performed with the contents described above.

Next, in the work support process C, alignment between the assembly component 200 and the corresponding 3D model information is performed (step S304).

The 3D model information is information in which a shape and a structure of the complete unit 300 and the assembly component 200 are generated in three dimensions. As the 3D model information, for example, computer-aided design (CAD) data or the like of the complete unit 300 and the assembly component 200 is applied.

This alignment is work of matching the 3D model information with a position of the assembly component 200 placed at the work site 8, which is the real world.

By performing the alignment, it is possible to display an image to be displayed on the display unit 21 and the information on the placement location P in a positional relationship appropriate for the work site 8 or the placement location P.

Next, in the work support process C, a portion for the assembly work to be started is determined (step S305).

In a case of determining the portion at this time, the control unit 26 displays information on the portion to be preceded, as a check image, on the display unit 21 based on information on a procedure for assembly of the complete unit 300. Accordingly, the corresponding portion is determined by checking of the operator 9 through the check screen.

Next, in the work support process C, it is determined whether or not the assembly work of the determined portion is started (step S306).

The operation of the determination at this time is repeated until it is determined that the assembly work is started.

In the work support process C, in a case where the assembly work W3 is started, information on the placement location P is displayed (step S307).

The placement location P at this time is a placement location in which the assembly component 200 related to the work, which is required according to the procedure of the assembly work W3, is placed. At this time, the control unit 26 displays the information on the corresponding placement location P on the display unit 21 as the support information 50.

A content of the display at this time is the content as described as the support information 50 in FIGS. 31 and 32.

Next, in the work support process C, analysis or accumulation of information on a status (change) of the placement location P after the assembly work W3 is started is performed (step S308).

At this time, the control unit 26 analyzes or accumulates information on the status of the placement location P based on information obtained by imaging and detecting the placement location P in step S101 (FIG. 28).

Accordingly, the head-mounted device 11 recognizes an object (mainly the assembly component 200) to be taken out from the placement location P for using in the assembly work W3. In addition, the information on the status of the placement location P at this time is saved in the storage unit 24.

Next, in the work support process C, in the same manner as the work support process B in Exemplary Embodiment 1, it is determined whether or not the assembly component 200 remains at the placement location P (step S309).

The placement location P at this time is a placement that is actually handled in the assembly work W3.

In this case, whether or not the assembly component 200 remains is determined by the control unit 26 based on the information on the status of the target placement location P.

In the work support process C, in a case where it is determined in step S309 that the assembly work does not remain, it is determined whether or not the assembly work on the same portion continues (step S310).

In a case where it is determined in step S310 that the assembly work W3 on the same portion continues, the process returns to step S306, and the operation described above in and after step S306 is repeated in the same manner.

In addition, in the work support process C, in a case where it is determined in step S310 that there is no assembly work on the same portion, it is determined whether or not the assembly work on another portion continues (step S311).

At this time, in a case where it is determined in step S311 that the assembly work on the other portion continues, the process returns to step S305, and the operation described above in and after step S305 is repeated in the same manner.

In this case, the work support process C for the assembly work W3 on the other portion is performed.

On the other hand, in the work support process C, in a case where it is determined in step S311 that there is no assembly work on another portion, the work support process C for the assembly work W3 for the complete unit 300 is all ended.

On the other hand, in the work support process C, in a case where it is determined in step S309 that the assembly component 200 remains, it is determined whether or not the remaining assembly component 200 is a component to be assembled (step S312).

In the work support process C, in a case where it is determined in step S312 that there is the component to be assembled, a display indicating that there is the remaining assembly component 200 is performed (step S313).

In this case, in the same manner as the work support process B, the control unit 26 displays a notification image on the display unit 21. The notification image is, for example, an image including message information or the like for notifying that there is a remaining assembly component.

In a case where the notification image is displayed, the operator 9 performs the assembly work W3 of the remaining assembly component 200 to complete the assembly work.

Therefore, in a case in which the notification image is displayed, the assembly work W3 is prevented from being incomplete.

On the other hand, in a case where it is determined in step S312 that the component is not the component to be assembled, the process proceeds to step S310 in the head-mounted device 11.

### Modification Examples.

The present invention is not limited to the configurations described as Exemplary Embodiments 1 and 2. In the present invention, it is possible to make changes within a range that does not change the gist of each invention described in the claims. In addition, the present invention also includes the following modification examples, for example.

The head-mounted device 11 may adopt a glass-type housing as the device main body 12.

In a case where this type is adopted, the display unit 21 has a light transmission type.

In the case of the display unit 21 in a light transmission type, the work site 8 is visually recognized through the display unit 21 in a light transmission type.

In a case of the display unit 21 in a light transmission type, information on the placement location P as support information is displayed alone to be projected on a screen of the display unit 21.

In the display unit 21 in a light transmission type, the screen portion may be movable between a use position and an open position of the device main body 12. The use position is a position when the screen portion of the display unit 21 is used to face the eyes 92 of the operator 9. The open position is a position at which the screen portion of the display unit 21 is moved to a position away from the eyes 92 and the front of the eyes 92 is opened.

The work site 8 of work using the work support system 1 may be outdoors as long as space recognition, 3D mapping, and the like can be performed.

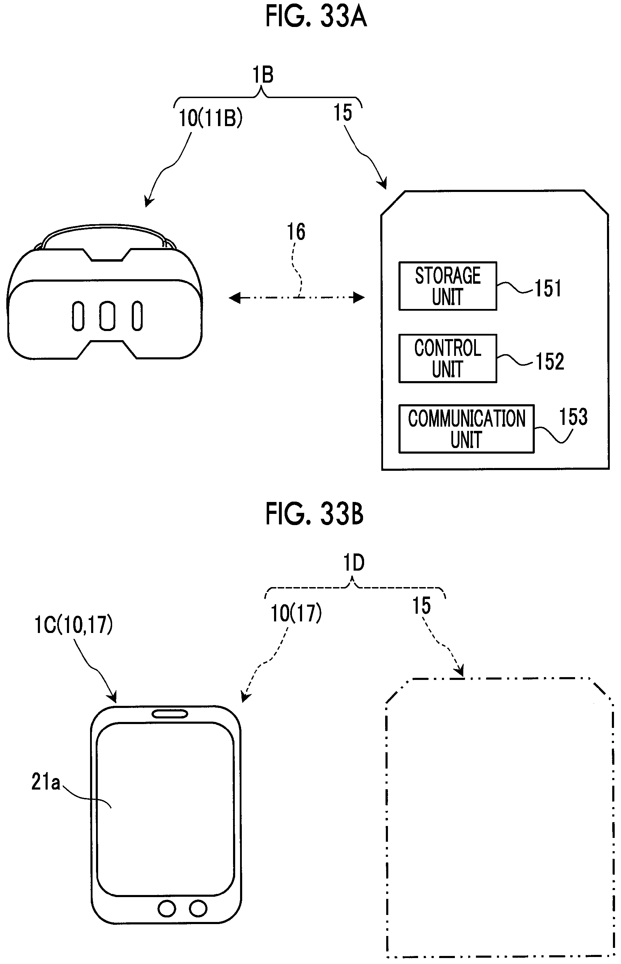

The work support system 1 may be configured as a work support system 1B consisting of the mobile device 10 and a server apparatus 15 (see FIG. 33A).

In the case of the work support system 1B, a head-mounted device 11B may be adopted as the head-mounted device 11 which is an example of the mobile device 10. The head-mounted device 11B is a device in which some of the storage unit 24 and the control unit 26 (see FIG. 3A) are equipped in the server apparatus 15. The server apparatus 15 is a device mainly including a computer, a storage device, and the like.

The server apparatus 15 constituting a part of the work support system 1B includes a storage unit 151, a control unit 152, a communication unit 153, and the like.

The storage unit 151 may store a part of information stored in the storage unit 24. The part of the information is a program related to the work support process, information on a working target, information on work, and information on a proposed placement location. Other information (information stored in the storage unit 24) may be stored. A part of the storage unit 151 may be constructed as a database for information other than the program.

The control unit 152 is configured to perform the work support process (including the placement location specifying process and the display process of information on the placement location). Accordingly, it is possible to reduce a load related to the information process of the control unit in the head-mounted device 11B.

In addition, in the case of the work support system 1B, the head-mounted device 11B and the server apparatus 15 are connected to each other by a data communication line 16 (see FIG. 33A). A type of the data communication line 16, a communication method, and the like are not particularly limited.

In addition, the work support system 1 may be configured as a work support system 1C consisting of only a portable type device 17, such as a tablet or a mobile phone, instead of the head-mounted device 11 as the mobile device 10 (see FIG. 33B).

Further, the work support system 1 may be configured as a work support system 1D consisting of the portable type device 17 and the server apparatus 15 (see FIG. 33B).

### (Supplementary Note)

(((1))) A work support system comprising:
   an imaging unit that images a work site at which an operator performs work on a working target;
   a display unit that displays information;
   a storage unit that stores the information; and
   a control unit that performs an information process and control,
   wherein the control unit displays information on a placement location at which an article related to the work, which is required according to a procedure of the work, is placed at the work site on the display unit alone or in combination with a video captured by the imaging unit, as support information.
(((2))) The work support system according to (((1))),
   wherein the control unit specifies the placement location at the work site.
(((3))) The work support system according to (((2))),
   wherein the control unit specifies, as the placement location, any location of a designated location that is input and designated by the operator, a use location that is specified as the placement location by the control unit using a location used by the operator for placing the article, and a proposed location that is proposed by the control unit.
(((4))) The work support system according to (((3))),
   wherein the control unit displays a selection image from which the operator selects any location of the designated location, the use location, and the proposed location as the placement location, on the display unit.
(((5))) The work support system according to any one of (((1))) to (((4))),
   wherein the control unit displays the information on the placement location when the work is started.
(((6))) The work support system according to (((5))),
   wherein the control unit sequentially switches and displays the information on the placement location corresponding to the procedure of the work.
(((7))) The work support system according to (((5))),
   wherein in a case where the article required for the work remains at the placement location after the work is ended, the control unit displays notification information that the remaining article is present on the display unit.
(((8))) The work support system according to (((7))),
   wherein in a case where there is an unrequired article that is not required for the work among remaining articles, the control unit does not display the notification information on the unrequired article.
(((9))) The work support system according to any one of (((1))) to (((8))),
   wherein the information on the placement location is an image including a mark indicating the placement location or an article placed at the placement location.
(((10))) The work support system according to any one of (((1))) to (((9))),
   wherein the information on the placement location is an image including a three-dimensional image in which the placement location is represented in three dimensions.
(((11))) The work support system according to any one of (((1))) to (((10))), further comprising:
   an operation unit that performs an input operation of the operator by tracking a motion of the operator pointing to an operation image displayed on the display unit.
(((12))) The work support system according to any one of (((1))) to (((11))),
   wherein the work support system is configured as a system including a mobile device that is carried and used by the operator.
(((13))) The work support system according to (((12))),
   wherein the mobile device is a head-mounted device that is worn on a head portion of the operator and is used.
(((14))) The work support system according to any one of (((1))) to (((13))),
   wherein in a case where the work is detachment work of detaching a component from the working target and attachment work of attaching one or both of a detachment component in the detachment work and a replacement component,
   the article is at least one or both of the detachment component and the replacement component, and
   the control unit displays the information on the placement location at least when the attachment work is started.
(((15))) The work support system according to (((14))),
   wherein the control unit specifies the placement location before the detachment work is started or after first work in the detachment work is ended.
(((16))) The work support system according to (((14))),
   wherein in a case where one or both of the detachment component and the replacement component required for the attachment work remain at the placement location after the attachment work is ended, the control unit displays notification information for notifying that one or both of the detachment component and the replacement component remain at the placement location, on the display unit.
(((17))) The work support system according to (((16))),
   wherein in a case where there is an unrequired detachment component that is not required to be attached among remaining detachment components, the control unit does not display the notification information on the unrequired detachment component.
(((18))) The work support system according to any one of (((1))) to (((13))),
   wherein in a case where the work is assembly work of assembling the working target as an assembly component,
   the article is at least the working target as the assembly component, and
   the control unit displays the information on the placement location in a case where the assembly work is started.
(((19))) The work support system according to (((18))),
   wherein the control unit cancels the display of the information on the placement location during the assembly work.
(((20))) A program causing a computer to execute:
   a function of displaying information on a placement location at which an article related to work performed by an operator on a working target, which is required according to a procedure of the work, is placed at a work site.
(((21))) The program according to (((20))), causing the computer to further execute:
   a function of specifying the placement location at the work site.

With the work support system according to (((1))), it is possible to work support of informing the operator of a location at which an article related to the work, which is required according to the procedure of the work, is placed at the work site.

With the work support system according to (((2))), the information on the placement location used as the support information can be managed as information specified according to the work site.

With the work support system according to (((3))), the degree of freedom of the specifying of the placement location is increased as compared with a case where the placement location is determined without an option.

With the work support system according to (((4))), it is possible to give an opportunity to the operator to select the placement location.

With the work support system according to (((5))), it is possible to recognize the location at which the article required for the procedure of the work is placed when the work is started.

With the work support system according to (((6))), it is possible to recognize the placement location at which the article required for work is placed, in accordance with the procedure of the work.

With the work support system according to (((7))), it is possible to prevent forgetting of work due to remaining of the article required for the work.

With the work support system according to (((8))), it is possible to prevent the work from being delayed due to the presence of the unrequired article.

With the work support system according to (((9))), it is possible to easily recognize the article required for the work or the location at which the article is placed, as compared with a case where the article or the like required for the work is not displayed in the image including the mark.

With the work support system according to (((10))), it is possible to accurately recognize the article required for the work or the location at which the article is placed by displaying the three-dimensional image, as compared with a case where the article or the like required for the work is not displayed in the image including the three-dimensional image.

With the work support system according to (((11))), it is possible to easily perform the input operation of the information as compared with a case where the operation unit for performing the input operation of the operator by tracking the motion of the operator pointing to the operation image displayed on the display unit is not provided.

With the work support system according to (((12))), the operator can receive the support for the work by carrying the work support system, as compared with a case where the work support system is not configured as a system including the mobile device.

With the work support system according to (((13))), a hand of the operator is free and the operator can easily perform the work, as compared with a case where the mobile device is not the head-mounted device.

With the work support system according to (((14))), it is possible to support the work of informing the operator of a location at which one or both of the detachment component and the replacement component are placed according to the procedure of the attachment work.

With the work support system according to (((15))), the information on the placement location used as the support information is managed as the information specified in accordance with the work site at an appropriate time such as before the start of the detachment work.

With the work support system according to (((16))), it is possible to prevent the attachment work from being incomplete.

With the work support system according to (((17))), the attachment work may not be delayed due to confusion in handling the unrequired detachment component.

With the work support system according to (((18))), it is possible to work support of informing the operator of the location at which the working target as the assembly component required according to the procedure of the assembly work is placed.

With the work support system according to (((19))), the display of the information on the placement location may not obstruct the field of view of the operator during the assembly work.

With the program according to (((20))), it is possible to perform work support of informing the operator of the location at which the article related to the work, which is required according to the procedure of the work, is placed at the work site.

With the program according to (((21))), the information on the placement location used as the support information can be acquired as the information specified according to the work site.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

1, 1A, 1B, 1C, 1D: work support system
8: work site
9: operator
10: mobile device
11, 11B: head-mounted device (example of mobile device)
15: server apparatus
17: portable type device (example of mobile device)
21: display unit
22: imaging unit
23: detection unit
24, 151: storage unit
25: operation unit
26, 152: control unit
41: specific image (example of operation image)
42: selection image (example of operation image)
43: display check image (example of operation image)
45: warning image (example of warning display)
46: second notification image (example of display of notification information)
50: support information (information on placement location)
51, 53: mark (example of support information)
52, 54: three-dimensional image (example of support information)
100: working target
110: article related to work
120: detachment component
126: component (example of unrequired detachment component)
160: replacement component
180: tool
200: assembly component (example of working target)
201 to 204, 210, 221 to 223: assembly component
P, P1, P2, P3, P4, P5, P6, P10, P11, P12, P13: placement location
W1: detachment work (example of work)
W2: attachment work (example of work)
W3: assembly work (example of work)

## Claims

1. A work support system comprising:
an imaging unit that images a work site at which an operator performs work on a working target;
a display unit that displays information;
a storage unit that stores the information; and
a control unit that performs an information process and control,
wherein the control unit displays information on a placement location at which an article related to the work, which is required according to a procedure of the work, is placed at the work site on the display unit alone or in combination with a video captured by the imaging unit, as support information.

2. The work support system according to claim 1,
wherein the control unit specifies the placement location at the work site.

3. The work support system according to claim 2,
wherein the control unit specifies, as the placement location, any location of a designated location that is input and designated by the operator, a use location that is specified as the placement location by the control unit using a location used by the operator for placing the article, and a proposed location that is proposed by the control unit.

4. The work support system according to claim 3,
wherein the control unit displays a selection image from which the operator selects any location of the designated location, the use location, and the proposed location as the placement location, on the display unit.

5. The work support system according to any one of claims 1 to 4,
wherein the control unit displays the information on the placement location when the work is started.

6. The work support system according to claim 5,
wherein the control unit sequentially switches and displays the information on the placement location corresponding to the procedure of the work.

7. The work support system according to claim 5,
wherein in a case where the article required for the work remains at the placement location after the work is ended, the control unit displays notification information that the remaining article is present on the display unit.

8. The work support system according to claim 7,
wherein in a case where there is an unrequired article that is not required for the work among remaining articles, the control unit does not display the notification information on the unrequired article.

9. The work support system according to any one of claims 1 to 8,
wherein the information on the placement location is an image including a mark indicating the placement location or an article placed at the placement location.

10. The work support system according to any one of claims 1 to 9,
wherein the information on the placement location is an image including a three-dimensional image in which the placement location is represented in three dimensions.

11. The work support system according to any one of claims 1 to 10, further comprising:
an operation unit that performs an input operation of the operator by tracking a motion of the operator pointing to an operation image displayed on the display unit.

12. The work support system according to any one of claims 1 to 11,
wherein the work support system is configured as a system including a mobile device that is carried and used by the operator.

13. The work support system according to claim 12,
wherein the mobile device is a head-mounted device that is worn on a head portion of the operator and is used.

14. A program causing a computer to execute:
a function of displaying information on a placement location at which an article related to work performed by an operator on a working target, which is required according to a procedure of the work, is placed at a work site.

15. The program according to claim 14, causing the computer to further execute:
a function of specifying the placement location at the work site.

## Amended claims

### Amended claims in accordance with Rule 137(2) EPC.

1. A work support system (1) comprising:
an imaging unit (22) that images a work site (8) at which an operator (9) performs work on a working target (100);
a display unit (21) that displays information;
a storage unit (24, 151) that stores the information; and
a control unit (26, 152) that performs an information process and control,
the work support system being **characterized in that**:
the control unit displays information on a placement location (P) at which an article (110) related to the work, which is required according to a procedure of the work, is placed at the work site on the display unit alone or in combination with a video captured by the imaging unit, as support information,
the article related to the work includes a detachment component (120) detached from the working target (100) or a tool (180) used for the work, and
the placement location is a location provided on a floor (81) or a peripheral object (85) separate from the working target, configured for temporarily placing the article related to the work.

2. The work support system according to claim 1,
wherein the control unit specifies the placement location at the work site.

3. The work support system according to claim 2,
wherein the control unit specifies, as the placement location, any location of a designated location (Px) that is input and designated by the operator, a use location (Py) that is specified as the placement location by the control unit using a location used by the operator for placing the article, and a proposed location (Pz) that is proposed by the control unit.

4. The work support system according to claim 3,
wherein the control unit displays a selection image (42) from which the operator selects any location of the designated location, the use location, and the proposed location as the placement location, on the display unit.

5. The work support system according to any one of claims 1 to 4,
wherein the control unit displays the information on the placement location when the work is started.

6. The work support system according to claim 5,
wherein the control unit sequentially switches and displays the information on the placement location corresponding to the procedure of the work.

7. The work support system according to claim 5,
wherein in a case where the article required for the work remains at the placement location after the work is ended, the control unit displays notification information (46) that the remaining article is present on the display unit.

8. The work support system according to claim 7,
wherein in a case where there is an unrequired article (120) that is not required for the work among remaining articles, the control unit does not display the notification information on the unrequired article.

9. The work support system according to any one of claims 1 to 8,
wherein the information on the placement location is an image including a mark (51, 53) indicating the placement location or an article placed at the placement location.

10. The work support system according to any one of claims 1 to 9,
wherein the information on the placement location is an image including a three-dimensional image (52, 54) in which the placement location is represented in three dimensions.

11. The work support system according to any one of claims 1 to 10, further comprising:
an operation unit (25) that performs an input operation of the operator by tracking a motion of the operator pointing to an operation image displayed on the display unit.

12. The work support system according to any one of claims 1 to 11,
wherein the work support system is configured as a system including a mobile device (10, 11, 11B, 17) that is carried and used by the operator.

13. The work support system according to claim 12,
wherein the mobile device is a head-mounted device (11, 11B) that is worn on a head portion of the operator and is used.

14. A program causing a computer to execute:
a function of displaying information on a placement location (P) at which an article (110) related to work performed by an operator (9) on a working target (100), which is required according to a procedure of the work, is placed at a work site (8), and being **characterized in that**:
the article related to the work includes a detachment component (120) detached from the working target (100) or a tool (180) used for the work, and
the placement location is a location provided on a floor (81) or a peripheral object (85) separate from the working target, configured for temporarily placing the article related to the work.

15. The program according to claim 14, causing the computer to further execute:
a function of specifying the placement location at the work site.
